(19) Europäisches Patentamt
European Patent Office
Office européen des brevets

(11) **EP 4 316 755 A1**

(12) **EUROPEAN PATENT APPLICATION**
published in accordance with Art. 153(4) EPC

(43) Date of publication:
**07.02.2024   Bulletin 2024/06**

(21) Application number: **22780287.3**

(22) Date of filing: **22.03.2022**

(51) International Patent Classification (IPC):
**B25J 19/06** (2006.01)        **G05B 23/02** (2006.01)
**G01M 99/00** (2011.01)

(52) Cooperative Patent Classification (CPC):
**B25J 19/06; G01M 99/00; G05B 23/02**

(86) International application number:
**PCT/JP2022/013021**

(87) International publication number:
**WO 2022/210072 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **29.03.2021   JP 2021054667**

(71) Applicant: **KAWASAKI JUKOGYO KABUSHIKI
KAISHA
Kobe-shi, Hyogo 650-8670 (JP)**

(72) Inventors:
• **KAWAI, Makoto
Kobe-shi, Hyogo 6508670 (JP)**
• **NAGAHAMA, Yasuhide
Kobe-shi, Hyogo 6508670 (JP)**

(74) Representative: **Müller-Boré & Partner
Patentanwälte PartG mbB
Friedenheimer Brücke 21
80639 München (DE)**

(54) **ROBOT MALFUNCTION SIGN DETECTION DEVICE AND ROBOT MALFUNCTION SIGN DETECTION METHOD**

(57)     In a robot failure symptom detection apparatus, a behavior time-sequence data acquisition unit performs processing of acquiring behavior time-sequence data relating to a motor of a joint of a robot from a robot operation, for each data collection unit period. An evaluation value calculation unit calculates an evaluation value for the behavior time-sequence data. A representative evaluation value generation unit generates a representative evaluation value representing the evaluation values for each data collection unit period. A sequence processing unit generates a sequence including the representative evaluation values. A determination unit creates a determination model, based on an initial sequence during an initial operation of the robot. After the initial operation, the determination unit inputs determination data including data based on an robot operation after the initial operation into the determination model, and acquires atypicality of the determination data.

FIG. 2

First Embodiment

**Description**

[Technical Field]

The present application relates to monitoring a state of a robot.

[Background Art]

When an industrial robot is repeatedly operated in a factory or the like, deterioration of each part (for example, a mechanical component) of the robot is inevitable. If such a situation progresses, the robot eventually breaks down. If the robot breaks down and a factory line stops for a long period of time, it will result in a large loss, and thus, there is a strong demand for performing maintenance before the robot breaks down. On the other hand, it is difficult to perform maintenance frequently from a viewpoint of maintenance costs and the like.

To perform maintenance at an appropriate timing, there is proposed an apparatus for predicting a remaining life of a reduction gear and the like of the robot. PTL 1 discloses this type of robot maintenance support apparatus.

The robot maintenance support apparatus of PTL 1 is configured to diagnose a future change tendency of a current command value based on data of a current command value of a servo motor configuring a robot drive system and determine a period until the current command value reaches a preset value, based on the diagnosed change tendency.

[Citation List]

[Patent Literature]

[PTL 1] JP-A-2016-117148

[Summary of Invention]

[Technical Problem]

The configuration of PTL 1 illustrates an example of diagnostic items of the current command value, that is, an I2 monitor, a duty, and a peak current. Simple use of such items may not be always effective to grasp a symptom of failure of a robot. Therefore, there is a demand for a new configuration by which it is possible to accurately detect that the robot may break down soon.

The present application has been made in view of the above circumstances, and an object thereof is to favorably grasp a symptom of failure of a robot.

[Solution to Problem]

The technical problems to be solved by the application are as described above. Next, the solutions to the problems and effects thereof will be described.

According to a first aspect of the present application, there is provided a robot failure symptom detection apparatus having the following configuration. That is, the robot failure symptom detection apparatus includes a behavior time-sequence data acquisition unit, an evaluation value calculation unit, a representative evaluation value generation unit, a sequence processing unit, and a determination unit. The behavior time-sequence data acquisition unit performs processing of acquiring behavior time-sequence data relating to a motor of a joint of the robot from a robot operation, for each data collection unit period. The evaluation value calculation unit calculates an evaluation value for the behavior time-sequence data acquired by the behavior time-sequence data acquisition unit. The representative evaluation value generation unit generates a representative evaluation value representing the evaluation values, from the evaluation values obtained by the evaluation value calculation unit, for each data collection unit period. The sequence processing unit generates a sequence of the representative evaluation values. The determination unit creates a determination model, based on an initial sequence that is a sequence generated by the sequence processing unit, during an initial operation of the robot. After the initial operation, the determination unit inputs determination data including data based on a robot operation after the initial operation, into the created determination model, and acquires atypicality of the determination data.

According to a second aspect of the present application, the following robot failure symptom detection method is provided. That is, the robot failure symptom detection method includes a behavior time-sequence data acquisition step, an evaluation value calculation step, a representative evaluation value generation step, a sequence processing step, a model creation step, and a determination step. In the behavior time-sequence data acquisition step, processing of acquiring behavior time-sequence data relating to a motor of a joint of the robot from a robot operation is performed for each data collection unit period. In the evaluation value calculation step, an evaluation value for the behavior time-sequence data acquired in the behavior time-sequence data acquisition step is calculated. In the representative evaluation value generation step, a representative evaluation value representing the evaluation values is generated from the evaluation values obtained by the evaluation value calculation step, for each data collection unit period. In the sequence processing step, a sequence of the representative evaluation values is generated. In the model creation step, a determination model is created based on an initial sequence that is a sequence generated in the sequence processing step, during an initial operation of the robot. In the determination step, after the initial operation, determination data including data based on a robot operation after the initial operation is input into the created determination model to acquire atypicality of the determination data.

As a result, it is possible to easily comprehend a symptom of failure of a robot. Therefore, it is possible to perform maintenance of the robot before failure.

[Advantageous Effects of Invention]

According to the present application, it is possible to favorably grasp a symptom of failure of a robot.

[Brief Description of Drawings]

[Fig. 1] Fig. 1 is a perspective view illustrating a configuration of a robot according to the present application.
[Fig. 2] Fig. 2 is a block diagram schematically illustrating an electrical configuration of a robot failure symptom detection apparatus according to a first embodiment.
[Fig. 3] Fig. 3 is a graph explaining a timing of a trigger signal relating to acquisition of time-sequence data.
[Figs. 4(a) and 4(b)] Figs. 4(a) and 4(b) are conceptual diagrams each illustrating the Hidden Markov Model.
[Fig. 5] Fig. 5 is a conceptual diagram illustrating the Ergodic Hidden Markov Model where the number of states is 2.
[Figs. 6(a) to 6(e)] Fig. 6(a) to Fig. 6(e) are schematic diagram each explaining an initial sequence and a determination sequence.
[Fig. 7] Fig. 7 is a graph showing a root mean square of a current value.
[Fig. 8] Fig. 8 is a graph showing a logarithmic likelihood regarding a similarity of a sequence of a root mean square of a current value.
[Fig. 9] Fig. 9 is a block diagram schematically illustrating an electrical configuration of a robot failure symptom detection apparatus according to a second embodiment.
[Fig. 10] Fig. 10 is a conceptual diagram showing a DTW method used in a third embodiment.
[Fig. 11] Fig. 11 is a graph showing a log-likelihood evaluated by inputting DTW-processed data into the Hidden Markov Model.
[Fig. 12] Fig. 12 is a block diagram schematically illustrating an electrical configuration of a robot failure symptom detection apparatus according to a fourth embodiment.
[Figs. 13(a) to 13(e)] Fig. 13(a) to Fig. 13(e) are schematic diagrams each explaining an initial sequence and determination data according to the fourth embodiment.
[Fig. 14] Fig. 14 is a block diagram schematically illustrating an electrical configuration of a robot failure symptom detection apparatus according to a fifth embodiment.
[Fig. 15] Fig. 15 is a block diagram schematically illustrating an electrical configuration of a robot failure symptom detection apparatus according to a sixth embodiment.
[Fig. 16] Fig. 16 is a display example of a tendency management screen displayed on a display unit in an example of predicting a failure timing without using a determination model.
[Fig. 17] Fig. 17 is a graph showing a change in a prediction line when the number of reference days is changed in an example of predicting a failure timing without using a determination model.
[Fig. 18] Fig. 18 is a graph showing frequency bands for calculating frequency analysis partial integrated values.
[Fig. 19] Fig. 19 is a display example of a tendency management screen displayed on a display unit in an example where it is possible to select a frequency analysis partial integrated value.

[Description of Embodiments]

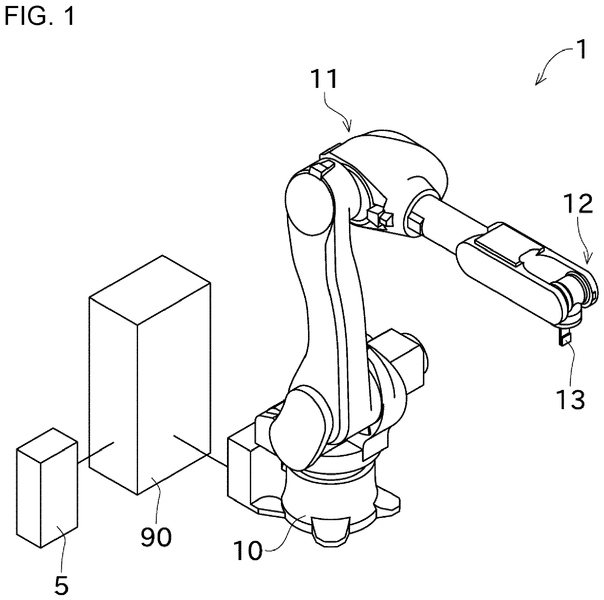

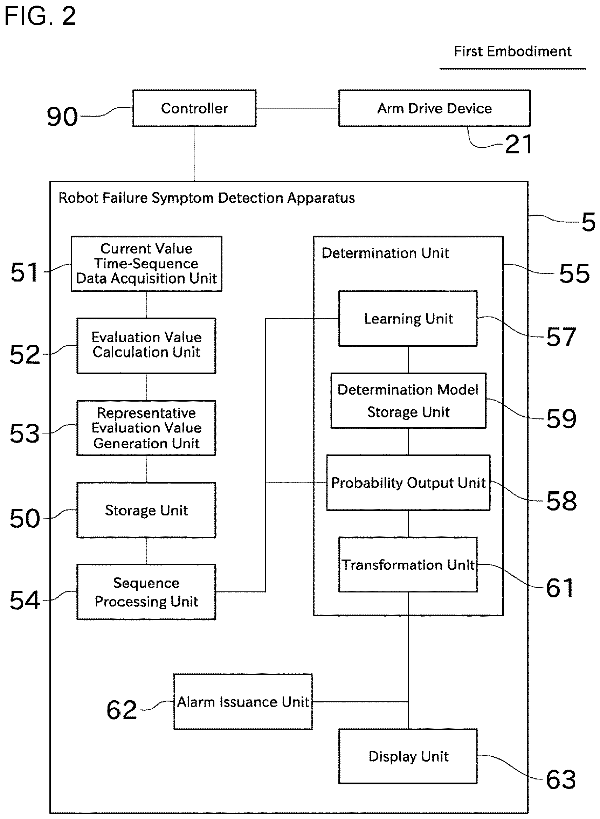

Next, embodiments of the present application will be described with reference to the drawings. Fig. 1 is a perspective view illustrating a configuration of a robot 1 according to an embodiment of the present application. Fig. 2 is a block diagram schematically illustrating an electrical configuration of the robot 1 and a robot failure symptom detection apparatus 5.

The robot failure symptom detection apparatus 5 according to the present application is used to monitor a state of an industrial robot capable of reproducing a predetermined operation. The robot failure symptom detection apparatus 5 is applied to the robot 1 as illustrated in Fig. 1, for example. The robot 1 performs a task such as painting, cleaning, welding, and transporting for a work to be operated. The robot 1 is realized by, for example, a vertically articulated robot.

A configuration of the robot 1 will be briefly described below with reference to Figs. 1 and 2 and the like.

The robot 1 includes a base member 10, an articulated arm 11 and a wrist unit 12. The base member 10 is fixed to the ground (for example, a factory floor). The articulated arm 11 includes a plurality of joints. The wrist unit 12 is attached to an distal end of the articulated arm 11. The wrist unit 12 is attached with an end effector 13 configured to perform a task on the work to be operated.

As illustrated in Fig. 2 , the robot 1 includes an arm drive device 21.

Such drive devices includes an actuators and a reduction gear. Such an actuator is configured, for example, as a servomotor. However, the configuration of the driving device is not limited to the above example. Each actuator is electrically connected to a controller 90. The actuator operates to reflect a command value input from the controller 90.

A driving force from each servomotor included in the arm drive device 21 is transmitted to each joint of the articulated arm 11, the base member 10, and the wrist unit 12 via the reduction gear. Each servomotor is attached with an unillustrated encoder for detecting its rotational position.

The robot 1 performs a task by reproducing an operation recorded by teaching. The controller 90 controls the actuator so that the robot 1 reproduces a sequence of operations taught in advance by a teacher. The teaching to the robot 1 may be performed by a teacher operating an unillustrated teaching pendant. As a result of the teaching to the robot 1, a program for operating the robot 1 is generated.

The controller 90 is configured as a known computer including, for example, a CPU, ROM, RAM, and an auxiliary storage device. The auxiliary storage device is configured as, for example, HDD and SSD. The auxiliary storage device stores therein a program for operating the robot 1 and the like.

The robot failure symptom detection apparatus 5 is connected to the controller 90 as illustrated in Fig. 1. The robot failure symptom detection apparatus 5 acquires a transition of a current value of a current flowing through the actuator (servomotor), for example, via the controller 90.

If an abnormality occurs in the servomotor and the reduction gear or the like connected thereto, it is considered that the current value of the servomotor is affected and fluctuates. Therefore, it is possible to say that such a current value reflects a state of the robot 1. It is possible to express a transition of the current value by repeatedly acquiring such a current value at short time intervals and arranging a large number of current values in time sequence. Data in which the current values are arranged in time sequence may be hereinafter referred to as current value time-sequence data (behavior time-sequence data).

The robot failure symptom detection apparatus 5 is capable of determining whether the robot 1 has an abnormality by monitoring the acquired current value time-sequence data. In the present embodiment, the robot failure symptom detection apparatus 5 focuses mainly on the servomotor and the reduction gear of each joint to determine whether there is the abnormality. Here, the term "abnormality" includes a case where the servomotor, the reduction gear, or a bearing has not encountered operation malfunction/disability yet, but the servomotor, the reduction gear, or the bearing is in a certain kind of situation indicating a symptom of such a problem.

As illustrated in Fig. 2, the robot failure symptom detection apparatus 5 includes a storage unit 50, a current value time-sequence data acquisition unit (behavior time-sequence data acquisition unit) 51, an evaluation value calculation unit 52, a representative evaluation value generation unit 53, a sequence processing unit 54, a determination unit 55, an alarm issuance unit 62, and a display unit 63.

The robot failure symptom detection apparatus 5 is configured as a known computer including CPU, ROM, RAM, and an auxiliary storage device. The auxiliary storage device is configured as, for example, HDD and SSD. The auxiliary storage device stores therein a program for evaluating a state of the robot 1, for example. As a result of cooperation of these hardware and software, the computer can work as the storage unit 50, the current value time-sequence data acquisition unit 51, the evaluation value calculation unit 52, the representative evaluation value generation unit 53, the sequence processing unit 54, the determination unit 55, the alarm issuance unit 62, the display unit 63, and the like.

The current value time-sequence data acquisition unit 51 acquires the above-described current value time-sequence data. The current value time-sequence data acquisition unit 51 acquires the current value time-sequence data for all the servomotors included in the arm drive device 21 of the robot 1. The current value time-sequence data is obtained individually for each of the plurality of servomotors (in other words, the plurality of reduction gears) arranged in each unit of the robot 1.

Here, the current value means a measured value obtained by measuring a magnitude of a current flowing through the servomotor with a sensor. A signal from the sensor is digitized by an A/D converter (not illustrated). Such a sensor is provided in a servo driver (not illustrated) configured to control the servomotor. However, the sensor may be provided for monitoring, separately from the servo driver. Alternatively, a current command value applied to the servomotor by the servo driver may be employed. The servo driver feedback-controls the servomotor so that a current current value approaches a current command value. Therefore, from a viewpoint of detecting an abnormality in the servomotor or the reduction gear, there is substantially no difference between the current value and the current command value.

A magnitude of a torque of the servomotor is proportional to a magnitude of the current. Therefore, a torque value or a torque command value may be used instead of the current value. A deviation (rotational position deviation) between a target value regarding a rotational position of the servomotor and an actual rotational position obtained by the encoder may be used. Normally, the servo driver applies, as the current command value, a value obtained by multiplying such a deviation by a gain to the servomotor. Therefore, a transition of the deviation of the rotational position shows a tendency similar to the transition of the current command value.

In the present embodiment, the current value time-sequence data is used to detect a symptom of failure. However, instead of the current value, a current command value, a torque value, a torque command value, or time-sequence data of a rotational position deviation may be used.

The current value time-sequence data acquisition unit 51 acquires the current value time-sequence data for each servomotor when the robot 1 performs the instructed operation.

As an example, a case where the robot 1 is instructed to perform one operation and then operates in a factory every day, for example from 9:00 to 17:00, is considered. The current value time-sequence data acquisition unit 51 acquires the current value time-sequence data for each servomotor each time the robot 1 performs a taught operation. The robot 1 repeats the same operation, and thus, a large amount of current value time-sequence data is obtained every day.

It is possible to divide a period from a start of use of the robot failure symptom detection apparatus 5 into a period from Day 1 to Day N and a period after the Day (N + 1). Hereinafter, the period from the Day 1 to Day N may be referred to as an initial operation period, and the period after the Day (N + 1) may be referred to as a monitoring period. It is possible to appropriately determine N, for example, N = 30. Acquisition of the above-described current value time-sequence data is performed every day during both the initial operation period and the monitoring period.

The initial operation period may be started at the same time as the robot is installed to start the operation, but for example, one month may be considered as a running-in period, and the initial operation period may be started after the running-in period. The monitoring period may be started after an appropriate interval period (for example, two months) passes following the initial operation period.

Each time the robot 1 performs one operation, the current value time-sequence data are obtained as much as the number of servomotors. A timing at which the current value time-sequence data acquisition unit 51 starts and ends the acquisition of the time-sequence data of the current value may be appropriately determined based on a signal output from the controller 90.

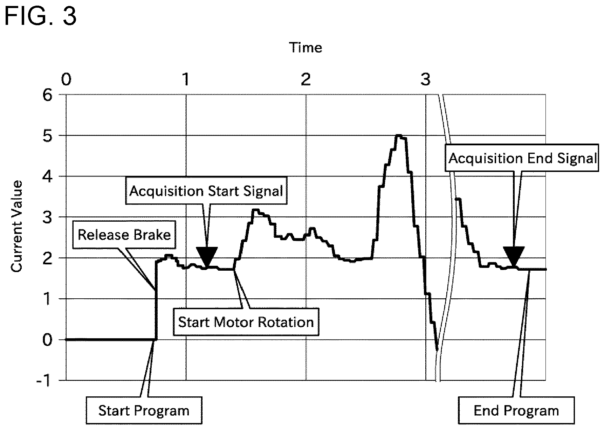

A graph in Fig. 3 shows an example of the current value of a current flowing through the servomotor of a certain joint when the robot 1 performs a reproduction operation. As shown in Fig. 3, the current value of the servomotor is zero in a state before a program of the reproduction operation is executed. At this time, an unillustrated electromagnetic brake operates at each joint, and thus, an attitude of the articulated arm 11 and the like is maintained.

Subsequently, a program for a reproduction operation of the robot 1 is started. As a result, a brake is released, and almost at the same time, a current begins to flow through the servomotor. At this point, an output shaft of the servomotor is controlled to stop. After a certain amount of time required for an angle of the output shaft of the servomotor to stabilize, rotation of the servomotor is started. As a result, the operation of the robot 1 is substantially started.

After the brake is released, the controller 90 outputs an acquisition start signal to the robot failure symptom detection apparatus 5 (that is, the current value time-sequence data acquisition unit 51) at a time point slightly before the rotation of the servomotor is started.

When a sequence of operations taught to the robot 1 are all completed, the servomotors are controlled to stop rotating. The controller 90 outputs an acquisition end signal to the current value time-sequence data acquiring unit 51 after the servomotor stops rotating and before the program ends.

The storage unit 50 includes, for example, the auxiliary storage device described above. The storage unit 50 stores therein a robot failure symptom detection program, the current value time-sequence data acquired by the current value time-sequence data acquisition unit 51, and the like. A robot failure symptom detection method of the present embodiment is realized by the robot failure symptom detection program.

In the present embodiment, the time-sequence data is obtained by arranging a large number of current values obtained by repeated detection at a short fixed time interval in chronological order. The time interval (sampling interval) during which the current value is detected, for example, is several milliseconds. The time-sequence data corresponds to the transition of the current value from the timing of the acquisition start signal to the timing of the acquisition end signal in the graph of Fig. 3.

The storage unit 50 stores therein period information indicating a data acquisition period in association with the time-sequence data.

As described above, it is possible to divide the current value time-sequence data acquired by the current value time-sequence data acquisition unit 51 into data collected during the initial operation period of the robot 1 and data collected during the monitoring period. The current value time-sequence data obtained in the initial operation period is used to create learning data for constructing a determination model, which will be described later. The current value time-sequence data collected during the monitoring period is used to create determination data to be input to the determination model.

To remove noise and the like, appropriate filtering processing may be performed on the current value time-sequence data. The filtering processing for the data is known, and thus, detailed description thereof will be omitted.

The evaluation value calculation unit 52 inputs each of the current value time-sequence data acquired by the current value time-sequence data acquisition unit 51 into a predetermined function to calculate an evaluation value. Such a function is to extract a certain feature of the current value time-sequence data. The original current value time-sequence data includes a plurality of scalar quantities (current values), whereas the evaluation value is one scalar quantity. Therefore, processing performed by the evaluation value calculation unit 52 corresponds to compression of information.

Any function may be used by the evaluation value calculation unit 52, but for example, a root mean square, a maximum value, a value range (a maximum value - a minimum value), and a frequency analysis integrated value may be used.

It is known that, for example, when the efficiency decreases due to wear of teeth of the reduction gear or the like, or when a torque constant decreases due to demagnetization of a magnet of the servo motor, a root mean square of the current value is changed. Therefore, it may be preferable to use the root mean square to determine whether there is a symptom of failure.

When a bearing or the like is damaged, there is a tendency that a whisker-like peak sometimes appears in the transition of the current value. Therefore, it may be preferable to use a maximum value or a value range to determine whether there is a symptom of failure.

A frequency analysis integrated value is proposed as one method of frequency analysis. The frequency analysis yields an amplitude spectrum, a power spectrum, or a power spectral density. Hereinafter, the amplitude spectrum, the power spectrum, or the power spectral density may be referred to as a frequency spectrum or simply a spectrum. The frequency analysis integrated value is, for example, a total value of the amplitude spectrum, the power spectrum, or the power spectrum density up to several tens of Hz obtained by the frequency analysis. Instead of the total value, an average value may be used to evaluate the frequency analysis integrated value. The amplitude spectrum and the power spectrum are evaluated by a known method described later. In some cases, such as when the robot tends to vibrate, it is preferable to use the frequency analysis integrated value to determine whether there is a symptom of failure. There are various possible causes for the tendency for the robot to vibrate. An example of possible causes is increase of lost motion due to a high degree of wear of the reduction gear.

If a natural frequency of a system of the robot 1 is 8 Hz, an 8Hz component increases due to resonance. In the above example of the frequency analysis integrated value, in addition to detection of a peak at 8 Hz, the total value of the amplitude spectra, the power spectra, or the power spectrum density up to several tens of Hz are also evaluated. With the passage of time, in addition to an original main mode vibration, a vibration due to deterioration of various parts is often added. By observing a wide frequency range, it is possible to widen a detection range of a symptom of failure.

The frequency analysis integrated value will be described in more detail below. The evaluation value calculation unit 52 performs FFT (Fast Fourier Transform) on the current value time-sequence data to evaluate a Fourier spectrum (complex number). A value obtained by squaring the Fourier spectrum is the power spectrum. Phase information is lost as a result of converting to the power spectrum. A square root of the power spectrum is the amplitude spectrum. The amplitude spectrum has an effective value and a peak value, and it is possible to use either value to determine the presence or absence of a symptom of failure. A power spectrum density function is also called a PSD (Power Spectral Density) function. The power spectrum density function is a spectrum function expressing a power value per unit frequency width (1 Hz width) so as not to depend on a frequency resolution of FFT.

An upper limit frequency that can be detected by the FFT is half a sampling frequency. A frequency half the sampling frequency is called a Nyquist frequency. In the present embodiment, a reciprocal of longer one of a control cycle of the robot 1 and a control cycle of the robot failure symptom detection apparatus 5 corresponds to the sampling frequency. For example, if the longer control cycle is 4 ms, 1/0.004/2 = 125, and thus, the Nyquist frequency is 125 Hz. In the FFT performed in the present embodiment, a value equal to or less than the Nyquist frequency is to be targeted. However, depending on a hardware configuration or a software algorithm of a device that executes the FFT, it is preferable to use, as an upper limit, a value obtained by multiplying the Nyquist frequency by a margin coefficient to reduce or eliminate aliasing distortion. That is, if the Nyquist frequency is f9 and the margin coefficient is k, it is possible to express the upper limit value of FFT as $k \times f9$. k is, for example, a value in the range of from 75% to 100%.

As in the present embodiment, if a behavior of the robot 1 is measured based on the current value or the current command value of an actuator to perform the FFT, there is an upper limit value based on the Nyquist frequency or the like. It is noted that a software for executing the FFT may be regulated so as not to exceed the Nyquist frequency.

On the other hand, the robot 1 normally has a natural frequency around 10 Hz. Normally, if a first-order natural frequency is 10 Hz, for up to a third-order or fourth-order higher-order component, it is possible to detect a signal with a certain level of strength. Therefore, if f0 is the natural frequency and, for example, the fourth or lower order signal is used, the upper limit may be $4.5 \times f0 = 45$ Hz. As a result, the fourth-order signal is acquired and a fifth-order signal is not acquired, and thus, it is possible to more accurately grasp a vibration component.

In addition to the above natural frequency, there is also a vibration caused by a failure. For example, due to a damage to a bearing of a motor, a damage to teeth of an input shaft gear and a revolution gear, a damage to a bearing of an eccentric shaft, and the like, a vibration other than the natural frequency may be generated. In particular, a vibration due to the damage to the bearing of the motor has a relatively high frequency, and for example, there is a possibility that a vibration at around 25 Hz may be generated. It is noted that depending on whether the damage is generated on an inner ring, an outer ring, or a rolling element of the bearing, or depending on the number of revolutions of the motor, the frequency value changes. In consideration of such a possibility comprehensively, it is preferable to set the upper limit to about 50 Hz, for example. Further, the Nyquist frequency may be set as the upper limit.

If a main natural vibration is prioritized, the spectrum may be searched for a first peak value in order from 0 Hz, the first peak value may be used as a first-order natural frequency f0, and the sum of values in a range of which the upper limit is $4.5 \times f0$ may be calculated. In such a case, a frequency to be used as a reference frequency in the search may be registered as the initial frequency, and the search may be performed in the range from 0.5 to 1.5 times the initial frequency. If a characteristic about a frequency is stable, the search may be performed in the range from 0.2 times to 1.8 times. If such margins are described as $\Delta f1$ and $\Delta f2$, and the initial frequency of the natural frequency of the search is described as f01, the search is performed in the range from $f01 - \Delta f1$ to $f01 + \Delta f2$.

As in the present embodiment, the articulated robot 1 is capable of circling the entire articulated arm 11 with respect to the base member 10, for example, around a center of rotation which is a vertical direction. Such a circling axis is referred to as a circling axis JT1. Inertia around the circling axis JT1 changes greatly depending on a posture of the articulated arm 11. As a result, the natural frequency f0 may vary between 10 Hz and 20 Hz. In a case of such an axis, it may not be possible to search for the first-order natural frequency f0 as described above. In such a case, an "assumed" natural frequency f02 may be registered as, for example, 12 Hz, and the sum of values in a range of which the upper limit is $4.5 \times f02$ may be calculated. Thus, it is possible to summarize the upper limit value and the lower limit value of the integrated frequency as described below. Further, any combination of the upper limit value and the lower limit value described below may be used.

For example, the following value may be used as the upper limit value.

(1) Fixed value
(2) (n + 0.5) times the first-order natural frequency
(3) (n + 0.5) times the assumed frequency

The fixed value may be 50 Hz, for example. However, it is necessary that the fixed value is equal to or less than the Nyquist frequency. The fixed value may be the Nyquist frequency, and may be a value obtained by multiplying the Nyquist frequency by a margin coefficient, n may be 4, and be any number including 1, 2, and 3, for example. Instead of 0.5, another numerical value of 0 or more and less than 1 may be applied.

For example, the following value may be used as the lower limit value.

(1) Fixed value
(2) 0
(3) $\alpha$ times the natural frequency

Here, the fixed value may be 6 Hz, for example. 0 is also referred to as a DC component, which is a quantity not involving vibration and corresponds to a load torque of each axis of the robot 1. Therefore, when evaluating with inclusion of the load torque, 0 may be used as the lower limit value, and when evaluating the vibration component only, a value obtained by multiplying the natural frequency by $\alpha$ may be used as the lower limit value. An example of $\alpha$ is 0.5, and $\alpha$ may be any value from 0.2 to 0.8. When evaluating only a value around the natural frequency, the lower limit $\alpha$ may be 0.5, and the upper limit may be 1.5 times the natural frequency, for example.

As described above, an easily detectable failure symptom differs depending on the function. An output value of the function is substantially input to a determination model described later and machine learning and the like are performed, and thus, the determination model also inherits a property of the function. Therefore, learning and evaluation of the determination model may be performed for each evaluation value obtained from a plurality of different functions.

In the above example, the frequency analysis integrated value is used as one function as the evaluation value. On the other hand, in the example described below, the frequency analysis integrated value is divided into a plurality of frequency bands, and a total value is evaluated for each range. To distinguish from the frequency analysis integrated value, an integrated value of the frequency spectrum for each frequency band is called a "frequency analysis partial integrated value". Such an integrated value may be abbreviated and called a "partial integrated value". Instead of the total value, the frequency analysis partial integrated value may be evaluated by using an average value.

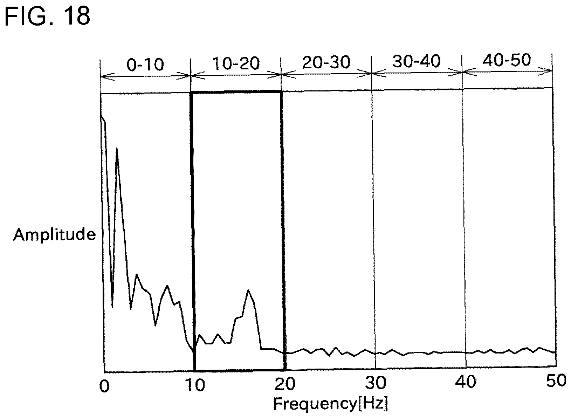

With reference to Fig. 18, the partial integrated value will be described. A vertical axis of Fig. 18 represents an amplitude of the spectrum, and a horizontal axis represents a frequency. In this example, the lower limit of frequency is 0 Hz and the upper limit is 50 Hz. As a value for dividing the range from 0 Hz to 50 Hz, 10, 20, 30, and 40 are set. By using such values to divide the spectrum, the following frequency bands are obtained.

Frequency bands: 0-10, 10-20, 20-30, 30-40, and 40-50

Each frequency band may or may not include both end frequencies (frequencies of lower and upper limits for defining the frequency band). It is noted that both end frequencies may be included in two adjacent frequency bands.

Here, a 10-20 frequency band indicated by a thick frame and a lower 0-10 frequency band in Fig. 18 are used as an example to describe a vibration generated in the robot 1. For example, the 0-10 frequency band includes a spectrum of approximately 8 Hz, which is a natural frequency of a robot arm system. Although there are other large amplitudes at 4, 2, and 1 Hz, in most cases, these frequencies are frequency components of a trajectory along which the robot moves. The frequency components of such a trajectory hardly change when a robot program for determining a motion is the same. The 10-20 frequency band includes a second-order higher harmonic of the natural frequency of about 16 Hz. In the 10-20 frequency band, components other than the higher harmonic of the natural frequency are also included.

Due to a change in a spring constant of the reduction gear, which determines the natural frequency, or an increase in lost motion amount, a spectrum of the natural frequency and the higher harmonics of the natural frequency may become large. Conversely, due to deterioration of other components (components such as a bearing attached to the motor shaft), the spectrum of the natural frequency and the higher harmonics of the natural frequency may increase. Irrespective of any specific cause, there are many cases where not only the amplitude changes (usually increases) but also the frequency changes. As a result of the deterioration, the natural frequency may lower and may shift to a lower frequency band if such a frequency is near the divided frequency band. Even in the band exceeding 20 Hz, there is a higher harmonic of the natural frequency, but its intensity gradually decreases and a ratio of other vibration components increases.

As described above, the partial integrated value obtained by dividing into a plurality of frequency bands may be used for the determination model described later. It is possible to utilize the partial integrated value for a longevity prediction and a failure symptom determination system, in which a plurality of tendency management devices are operated simultaneously.

It is noted that although the frequency bands shown in Fig. 18 are consecutive, gaps may be present between the frequency bands. For example, the frequency bands may be provided as follows: 0-10, 20-30, and 40-50. Alternatively, the frequency bands may overlap. For example, the frequency bands may be provided as follows: 0-10, 0-20, and 0-30. The partial integrated value is used for tendency management, and thus, the partial integrated value itself has no meaning and a change in the partial integrated value is evaluated. Therefore, it is not necessary to include all frequencies without omission or overlap, and it may be sufficient to select a frequency band allowing for easy tendency management. Of course, as shown in Fig. 18, all frequencies may be included without omission or overlap.

The representative evaluation value generation unit 53 evaluates a representative evaluation value from a plurality of evaluation values obtained by the evaluation value calculation unit 52. As described above, one evaluation value corresponds to an evaluation value obtained by compressing information of the current value time-sequence data, but the representative evaluation value may be considered as information obtained by further compressing a plurality of evaluation values.

For example, it is considered a case where the robot 1 operates from 9:00 to 17:00 on a certain day. During such a period, the robot 1 repeats the same operation a large number of times. Therefore, a large number of time-sequence current value data is obtained in the current value time-sequence data acquisition unit 51, and in the evaluation value calculation unit 52, an evaluation value of each time-sequence current value data is obtained. The representative evaluation value generation unit 53 generates one evaluation value representing the certain day as a representative evaluation value from a large number of evaluation values.

For example, between 9:00 and 17:00, a room temperature in a factory may change due to an outside temperature. Alternatively, a grease applied to joints of the robot 1 has a low temperature at the beginning of operation, but the temperature rises as time passes from the start of operation, resulting in a decrease in viscosity. To suppress these effects, the representative evaluation value generation unit 53 may select a median value from a large number of evaluation values obtained from 9:00 to 17:00 and use the median value as the representative evaluation value. The representative evaluation value generated by the representative evaluation value generation unit 53 is stored in the storage unit 50.

The representative evaluation value is not limited to the median value, and may be an average value, for example.

Hereinafter, a temporal range to which a plurality of evaluation values represented by one representative evaluation value belongs is called a data collection unit period. In the above example, one representative evaluation value represents the current value time-sequence data for one day, and thus, the data collection unit period is one day.

For example, a factory may have a plurality of shifts per day (for example, two shifts). One work shift may be rephrased as one work cycle or one operation cycle of the robot 1. In this case, the data collection unit period may be a period of one shift, but preferably one day including two shifts. When one day including day and night is set as the data collection unit period, it is possible to prevent deterioration in detection accuracy of a failure symptom due to an influence of a fluctuation cycle of an outside temperature. The data collection unit period may be a plurality of days (for example, 2 days, 3 days, or 1 week).

The sequence processing unit 54 arranges a plurality of representative evaluation values stored in the storage unit 50 to generate a sequence. The sequence of representative evaluation values generated by the sequence processing unit 54 is input to the determination unit 55.

The determination unit 55 uses the representative evaluation value generated by the representative evaluation value generation unit 53 to determine whether there is a symptom of failure of the robot 1. The determination unit 55 includes a learning unit 57, a probability output unit 58, and a transformation unit 61.

When the representative evaluation value is utilized instead of the evaluation value, as described above, it is possible to eliminate an influence of a temperature change during one day, for example. As a result, an effect of compressing the evaluation value may occur. On the other hand, if the evaluation method is a tendency management or the evaluation value is temperaturecompensated by some method, all the obtained evaluation values may be evaluated instead of the representative evaluation value.

The learning unit 57 learns N representative evaluation values generated in N data unit periods during an initial operation period of the robot 1 to create a determination model, which is a machine learning model.

The determination unit 55 of the present embodiment uses the Hidden Markov Model as the determination model.

Here, the Hidden Markov Model will be briefly described. The Hidden Markov Model is one of probabilistic models for implementing statistical modeling for sequential data. In the Hidden Markov Model, when sequential data is applied, it is possible to calculate a probability of appearance of the sequential data.

In the Hidden Markov Model, if the sequential data is observed, it is considered that there is a sequential state behind such data. It is not possible to observe such a state and possible to observe the data only.

The Hidden Markov Model is described below. There are three types of parameters for defining the Hidden Markov Model, that is, a transition probability A, an output probability B, and an initial probability $\Pi$. Here, it is assumed that the number of states is R. The initial probability $\Pi$ is the same symbol as $\Pi$ representing a product in Equation (1) described later, but has a different meaning.

The transition probability A is a set of $a_{ij}$ ($A = \{a_{ij}\}$). $a_{ij}$ represents a probability that a state i at a time (t - 1) is changed to a state j at a time t. Here, i and j are integers of 1 or more and R or less.

The output probability B is a set of $b_{jk}$ ($B = \{b_{jk}\}$). $b_{jk}$ represents a distribution of probability that a k-th observed signal $v_k$ is output in the state j. In the present embodiment, a continuous value is assumed as the output, and a probability that the observed signal $v_k$ is output is represented by a normal distribution. A single normal distribution is used in the present embodiment, but a mixed normal distribution may be used instead.

The initial probability $\Pi$ is a set of $\pi_j$ ($\Pi = \{\pi_j\}$), $\pi_j$ represents a probability of being in the state j at time t = 0. In the Hidden Markov Model, the state is hidden, but the initial value is arbitrarily tentative.

The Hidden Markov Model is roughly classified into the Ergodic Hidden Markov Model and the Left-to-Right Hidden Markov Model.

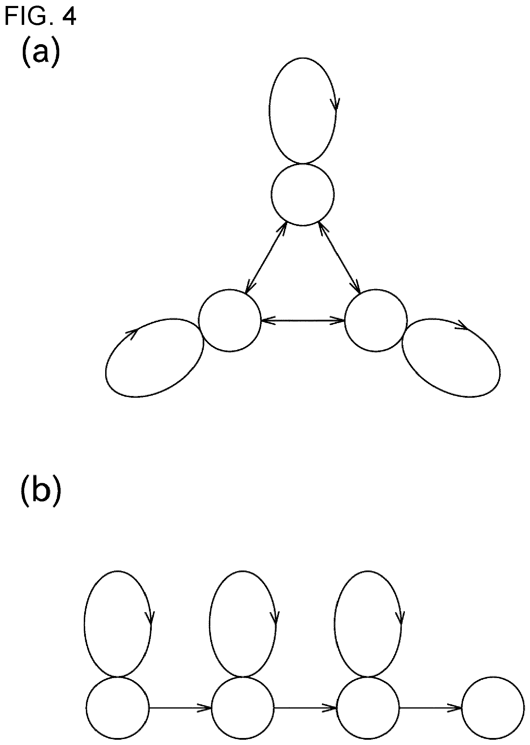

The Ergodic Hidden Markov Model is shown in Fig. 4(a). The Ergodic Hidden Markov Model includes a plurality of states. Fig. 4(a) shows an example where there are three states. Each state is capable of transition to any state including itself.

The Ergodic Hidden Markov Model has an ergodicity. The ergodicity means that [A] it is possible to reach any state from any state, [B] there is no periodicity, and [C] the number of states is finite. When the Hidden Markov Model has the ergodicity, an ensemble mean and a time mean are equal.

The Left-to-Right Hidden Markov Model is shown in Fig. 4(b). The Left-to-Right Hidden Markov Model includes a plurality of states. Fig. 4(b) shows an example in which there are four states. In the Left-to-Right Hidden Markov Model, a state transition is always unidirectional, and thus, once the transition is made to another state, it is not possible to return to the state before the transition.

The Left-to-Right Hidden Markov Model does not have ergodicity. The Left-to-Right Hidden Markov Model has a constraint in which backward transition is not possible. Thus, there is the constraint on the state transition, and thus, the Left-to-Right Hidden Markov Model has an advantage that it is possible to reduce a calculation amount, and is suitable for evaluating the time-sequence data.

In the present embodiment, both the Ergodic Hidden Markov Model and the Left-to-Right Hidden Markov Model may be used as the determination model. The number of states of the Hidden Markov Model is arbitrary as long as such a number is two or more, and is determined as appropriate.

The learning unit 57 inputs the sequence of N representative evaluation values described above to the determination model, and updates the parameters of the transition probability, the output probability, and the initial probability so that the probability that the determination model generates the sequence of the representative evaluation value increases. At this time, a known EM (Expectation Maximization) method and Baum-Welch algorithm are used.

When the Ergodic Hidden Markov Model is used, an order in which a plurality of representative evaluation values are input to the learning model may or may not be fixed. When the Left-to-Right Hidden Markov Model is used, it is preferable that an input order of the plurality of representative evaluation values is fixed in chronological order. The sequence processing unit 54 generates a sequence including the N representative evaluation values according to a condition and outputs the generated sequence to the determination unit 55.

The probability output unit 58 inputs the sequence including the representative evaluation value obtained during the monitoring period to the created determination model, and acquires a probability that the sequence appears.

In the Hidden Markov Model, when the sequence of the representative evaluation values is input, it is possible to estimate, through calculation, a probability that such a sequence appears. The calculated probability may also be thought of as a quantification (likelihood) of plausibility of the sequence input to the model. If the probability output from the model is low, it is possible to say that it is highly probable that the sequence of representative evaluation values input to the model is different from normal. Therefore, such a probability reflects the atypicality. It is possible to replace the atypicality with a degree of abnormality. In the Hidden Markov Model, a higher probability is output as the input sequence is more similar to the learned sequence. Therefore, obtaining the probability is substantially the same as obtaining the similarity of two sequences. The probability output unit 58 outputs the obtained probability to the transformation unit 61.

The transformation unit 61 logarithmically transforms the probability obtained from the probability output unit 58. The obtained value (logarithmic likelihood) is output to the alarm issuance unit 62 and the display unit 63.

The alarm issuance unit 62 issues an alarm of a symptom of failure if the logarithmic likelihood input from the transformation unit 61 is out of a predetermined range. In the present embodiment, the alarm is realized by the alarm issuance unit 62 controlling a display of the display unit 63.

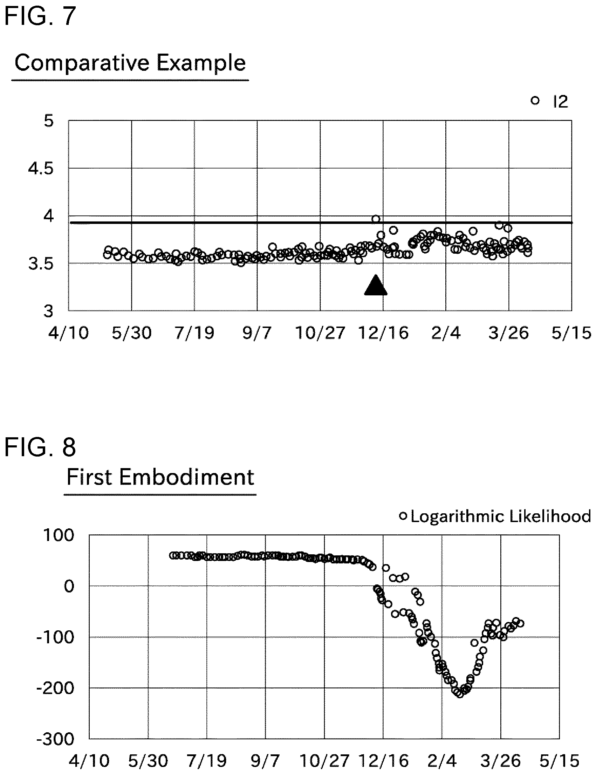

The display unit 63 is capable of displaying a graph corresponding to Fig. 8 and the like. The display unit 63 includes a display device such as a liquid crystal display. An operator monitors whether the logarithmic likelihood of the sequence of the representative evaluation values deviates from a normal tendency. The operator is capable of utilizing such information to properly establish a future maintenance plan. In addition, the display unit 63 is capable of switching axes to be displayed and outputting an alarm in the form of a message, for example, according to a signal from the alarm issuance unit 62.

Next, a robot failure symptom detection method used by the robot failure symptom detection apparatus 5 of the present embodiment will be described along a data flow indicated by a thin line in Fig. 2. In the following description, it is assumed that a data collection unit period is one day and N is 30.

The current value time-sequence data acquisition unit 51 of the robot failure symptom detection apparatus 5 acquires, for each of a plurality robot operations reproduced in a certain day, the current value time-sequence data via the current value time-sequence data acquisition unit 51 (behavior time-sequence data acquisition step).

Thereafter, the evaluation value calculation unit 52 calculates an evaluation value by using a function such as a root mean square from each of the current value time-sequence data acquired by the current value time-sequence data acquisition unit 51 (evaluation value calculation step). The number of evaluation values obtained is equal to the number of current value time-sequence data.

Next, the representative evaluation value generation unit 53 generates a representative evaluation value representing a plurality of evaluation values obtained in one day (representative evaluation value generation step). The representative evaluation value may be a median value of a plurality of evaluation values obtained within one day.

Each day, the above process is repeated. As a result, 30 representative evaluation values are obtained at the end of the data collection unit period (30 days) for N times, which is the initial operation period.

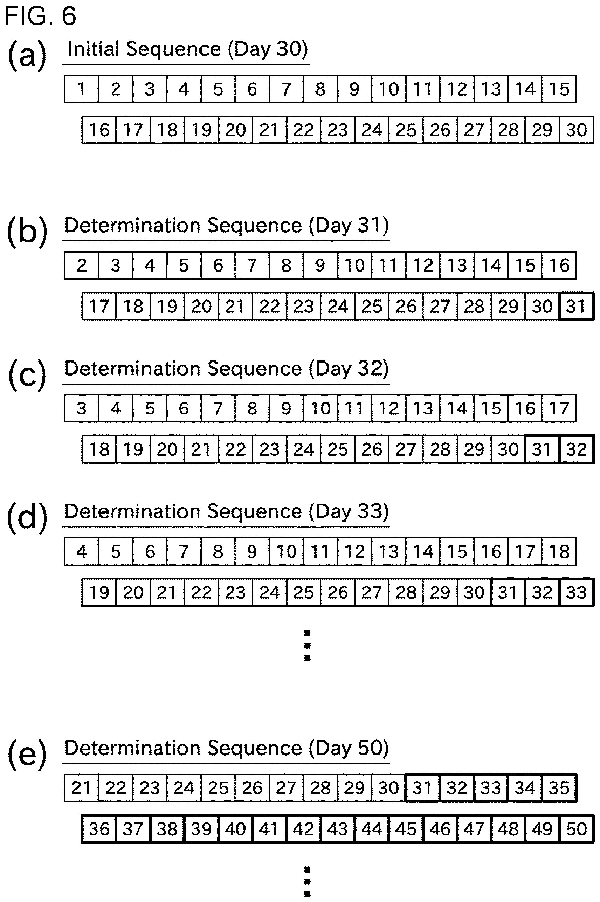

When the 30 representative evaluation values are obtained, the sequence processing unit 54 generates a sequence by arranging the representative evaluation values from the Day 1 to the Day 30 in chronological order (sequence processing step). The sequence processing unit 54 outputs the generated sequence of representative evaluation values to the determination unit 55. Hereinafter, such a sequence may be referred to as an initial sequence. The initial sequence is shown in Fig. 6(a). In Figs. 6(a) to 6(e), one square represents one representative evaluation value. A numeral in the square indicates on what day the representative evaluation value is obtained.

The learning unit 57 of the determination unit 55 inputs such an initial sequence to a machine learning model for a purpose of learning (model creation step). A sequence of representative evaluation values is input to the determination model, and the parameters of the determination model are corrected so that an occurrence probability of such a sequence is increased. Specifically, the parameters of the determination model are the transition probability A, the output probability B, and the initial probability Π described above. Such processing corresponds to one learning, and the learning is repeated a plurality of times. Iteration of such processing corresponds to a training phase of the machine learning.

It is conceivable that the number of times of learning is, for example, 100. However, even before the number of times of learning reaches 100, if convergence of the parameters of the determination model is confirmed, the learning may be terminated. After the learning is completed, the parameters of the determination model are stored in a determination model storage unit 59 included in the determination unit 55.

After the Day (N + 1), the monitoring period starts. During the monitoring period, the sequence processing unit 54 creates a sequence of representative evaluation values for which the determination unit 55 evaluates the atypicality (sequence processing step). The sequence processing unit 54 outputs the generated sequence of representative evaluation values to the determination unit 55. Hereinafter, such a sequence may be referred to as a determination sequence. In the present embodiment, the determination sequence corresponds to determination data. The determination sequence generated by the sequence processing unit 54 changes each time the representative evaluation value generation unit 53 generates a new representative evaluation value, that is, every day. The determination sequence includes at least one representative evaluation value after the Day (N + 1).

Processing for the determination sequence will be specifically described below. When the representative evaluation value of the (N + 1)th data collection unit period (Day 31) is obtained, the sequence processing unit 54 initializes the determination sequence with an initial sequence. Such an initialization process is performed only for a first time (Day 31). Subsequently, the sequence processing unit 54 adds the obtained latest representative evaluation value to an end of the determination sequence. As a result of such an addition, the number of representative evaluation values of the determination sequence is increased to 31, and thus, the sequence processing unit 54 deletes the oldest representative evaluation value positioned at a head of the sequence. The determination sequence on the Day 31 is shown in Fig. 6(b).

Such update processing is similarly performed on the Day 32 or later. Thus, the sequence processing unit 54 deletes the oldest representative evaluation value from the previous determination sequence, shifts the subsequent representative evaluation values after the first representative evaluation value to a head of the sequence by one, and adds the latest representative evaluation value to the end of the sequence to create a sequence of representative evaluation values for each day. The determination sequence on the Day 32 is shown in Fig. 6(c), and the determination sequence on the Day 33 is shown in Fig. 6(d). The representative evaluation value of the determination sequence is replaced one by one for each update processing.

The probability output unit 58 inputs the determination sequence generated by the sequence processing unit 54 to the determination model stored in the determination model storage unit 59 to evaluate a probability that the sequence appears. Such processing corresponds to an evaluation phase of the machine learning. The probability output unit 58 outputs the obtained probability to the transformation unit 61.

The transformation unit 61 transforms the probability output from the probability output unit 58 into a logarithm to evaluate a logarithmic likelihood. Such a logarithmic transformation facilitates handling of numerical values.

The alarm issuance unit 62 determines whether there is a symptom of failure by checking whether the obtained logarithmic likelihood is within a predetermined range (failure symptom determination step). Specifically, the alarm issuance unit 62 compares the logarithmic likelihood with a predetermined threshold. If the logarithmic likelihood falls below the predetermined threshold value, the alarm issuance unit 62 issues an alarm by, for example, displaying on the display unit 63 that a failure symptom is detected (alarm generation step).

Next, an effect of the present embodiment using the Hidden Markov Model will be described.

A graph of Fig. 7 shows a transition from a start of the robot operation, of a root mean square (sometimes referred to as I2) of a current value of a certain servomotor. A horizontal axis is a time, and a vertical axis is a root mean square. In such a graph example, it is possible to see that the root mean square slightly rises from a vicinity of a triangular mark. However, the amount of increase is small, and thus, it is difficult to determine whether there is a symptom of failure. A thick line in Fig. 7 indicates a value obtained by calculating an average of values during initial 30 days and multiplying the obtained value by 1.1. If the thick line is used as an abnormality determination threshold, there is only one point determined to be abnormal.

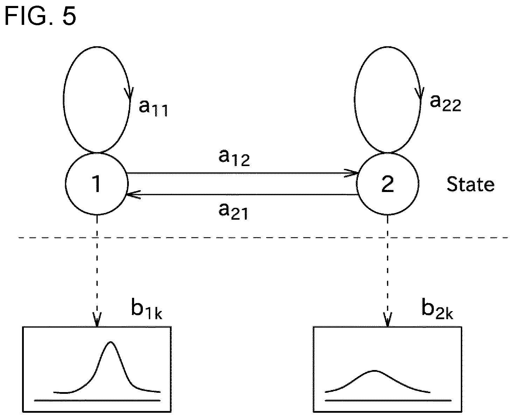

A graph of Fig. 8 shows a result obtained by evaluating the above root mean square by using the Hidden Markov Model. A horizontal axis is a time, and a vertical axis is a logarithmic likelihood. In the example of Fig. 8, the Ergodic Hidden Markov Model where the number of states is two shown in Fig. 5 is used.

As shown in Fig. 8, the logarithmic likelihood starts to change around December 16th. The symptom of an abnormality is clearly manifested by a slope-like transition of a plurality of points (rather than by a single point outlier as in Fig. 7). It is considered that this is because a proportion of abnormal data in the determination sequence tends to increase cumulatively each time the determination sequence is updated.

Due to such a property, the operator is capable of intuitively and easily grasping the symptom of abnormality.

As described above, the robot failure symptom detection apparatus 5 of the present embodiment includes the current value time-sequence data acquisition unit 51, the evaluation value calculation unit 52, the representative evaluation value generation unit 53, the sequence processing unit 54, and the determination unit 55. The current value time-sequence data acquisition unit 51 performs processing of acquiring the current value time-sequence data of a drive current of a joint of the robot 1 from the robot operation for each data collection unit period. The evaluation value calculation unit 52 calculates the evaluation value about the current value time-sequence data acquired by the current value time-sequence data acquisition unit 51. The representative evaluation value generation unit 53 generates the representative evaluation value representing the evaluation values from the evaluation values obtained by the evaluation value calculation unit 52 for each data collection unit period. The sequence processing unit 54 generates the sequence of representative evaluation values. The determination unit 55 creates the determination model, based on the initial sequence, which is the sequence generated by the sequence processing unit 54, during the initial operation of the robot 1. After the initial operation, the determination unit 55 inputs the determination sequence including the representative evaluation value based on the robot operation obtained after the initial operation to the created determination model to acquire the atypicality of the determination sequence.

As a result, it is possible to favorably detect the symptom of the failure of the robot 1. Therefore, it is possible to perform the maintenance of the robot 1 before the failure occurs.

In the present embodiment, after the initial operation, the determination unit 55 inputs, as the determination data, the determination sequence including a plurality of representative evaluation values to the determination model, for each data collection unit period to acquire the atypicality, based on the output of the determination model. To generate the determination sequence, the sequence processing unit 54 initializes the determination sequence with the initial sequence, and then, performs the update processing on the determination sequence each time the representative evaluation value is generated. The update processing includes processing of adding the representative evaluation value of the data collection unit period to a determination sequence not yet updated.

This makes it easier to detect the symptom of failure of the robot 1 from the transition of the atypicality.

In the robot failure symptom detection apparatus 5 of the present embodiment, the determination model is the Hidden Markov Model trained using the initial sequence.

This makes it possible to highly accurately detect the symptom of failure of the robot 1 by using a model capable of easily handling the sequence data.

In the robot failure symptom detection apparatus 5 of the present embodiment, the Hidden Markov Model is the Ergodic Hidden Markov Model. The number of states provided in the Ergodic Hidden Markov Model is 2.

This makes it possible to simplify the configuration of the model.

In the robot failure symptom detection apparatus 5 of the present embodiment, the Hidden Markov Model may be the Left-to-Right Hidden Markov Model trained with the initial sequence. In this case, the initial sequence and the determination sequence are configured as a sequence in which N representative evaluation values are arranged in chronological order.

As a result, it is possible to highly accurately detect the symptom of failure of the robot 1 by using a model excellent at handling the time-sequence data. It is also possible to reduce an amount of calculation by constraints on state transitions in the model.

In the robot failure symptom detection apparatus 5 of the present embodiment, the root mean square is calculated as the evaluation value. However, a maximum value, a value range, or a frequency analysis integrated value may be calculated as the evaluation value.

As a result, it is possible to favorably evaluate a change in the current value time-sequence data.

In the robot failure symptom detection apparatus 5 of the present embodiment, the evaluation value calculation unit 52 performs frequency analysis on each of the behavior time-sequence data acquired by the current value time-sequence data acquisition unit 51 to evaluate a frequency spectrum, and evaluates, as the representative evaluation values, a plurality of partial sums of the frequency spectrum, for a plurality of previously determined frequency bands. The representative evaluation value generation unit 53 generates a plurality of representative evaluation values for each data collection unit period. The determination model is a model to which a multi-dimensional sequence may be input as the initial sequence.

Accordingly, it is possible to make a determination regarding the failure symptom of the robot 1, based on the frequency spectrum obtained based on the frequency analysis.

In the robot failure symptom detection apparatus 5 of the present embodiment, the data collection unit period is determined to be an integral multiple of an environmental temperature change cycle, for example, an integral multiple of one day.

As a result, it is possible to substantially eliminate an effect of a cyclic change in the environmental temperature. Therefore, it is possible to provide excellent detection accuracy of the failure symptom.

In the robot failure symptom detection apparatus 5 of the present embodiment, the data collection unit period is determined to be an integral multiple of a work cycle or the operation cycle of the robot 1.

As a result, it is possible to substantially eliminate an influence of a phenomenon that a viscosity of grease is high at the start of the work cycle or the operation cycle of the robot 1, for example. Therefore, it is possible to provide excellent detection accuracy of the failure symptom.

The robot failure symptom detection apparatus 5 of the present embodiment includes the display unit 63 configured to display the atypicality output from the determination unit 55.

As a result, it is possible to indicate to outside the symptom of failure of the robot 1 in a easy-to-understand manner.

In the present embodiment, the determination unit 55 outputs the atypicality in a logarithmically transformed form.

This makes it easier to numerically handle the output of the determination unit 55. For example, it is possible to prevent an output of the graph of Fig. 8 from fluctuating excessively sensitively.

The robot failure symptom detection apparatus 5 of the present embodiment includes the alarm issuance unit 62. The alarm issuance unit 62 issues an alarm indicating the symptom of failure when the atypicality output by the determination unit 55 is out of a predetermined range.

As a result, it is possible to clearly indicate to outside the symptom of failure.

Next, a second embodiment will be described. In the description of the second and subsequent embodiments, members that are the same as or similar to those of the above-described first embodiment are denoted by the same reference numerals in the drawings, and redundant descriptions may be omitted.

In the present embodiment, as the determination model, instead of the Hidden Markov Model, a model based on a normal distribution is used.

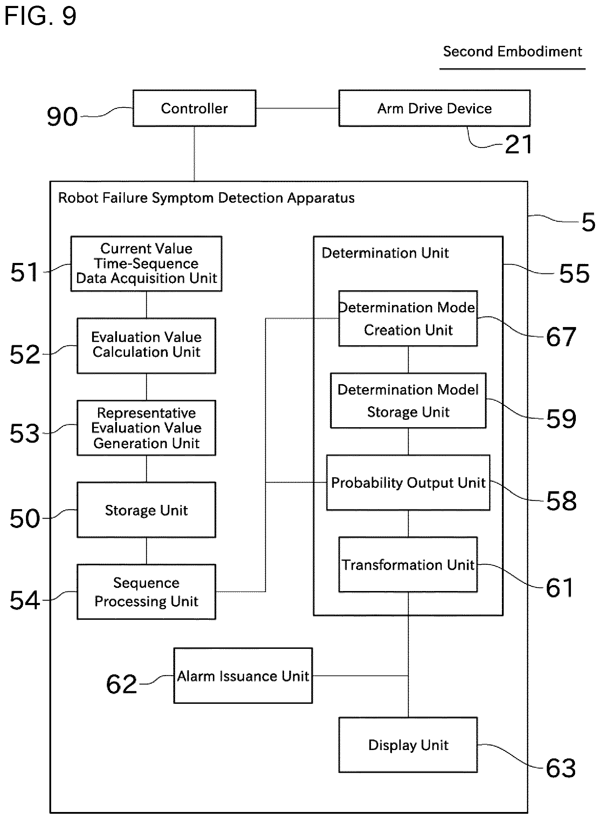

Fig. 9 is a block diagram of the present embodiment. The determination unit 55 of the present embodiment includes a determination model creation unit 67 instead of the learning unit 57 of the first embodiment. Other portions are substantially the same as in the first embodiment.

The determination model used in the present embodiment will be described below. It is considered a case where an initial sequence $C_{1(1)}$, $C_{1(2)}$, ... , $C_{1(N)}$ including the N representative evaluation values are input to the determination model creation unit 67. The determination model creation unit 67 calculates an average $\mu$ and a standard deviation $\sigma$ of the N representative evaluation values of the initial sequence.

In the determination unit 55, a determination model f is constructed. The determination model f is represented by the following Equation (1),

[Math. 1]

$$f = \prod_{q=1}^{Q} \frac{1}{\sqrt{2\pi}\sigma} \exp\left\{-\frac{(C_{2(q)} - \mu)^2}{2\sigma^2}\right\} \ \ldots(1)$$

where, $C_{2(1)}$, $C_{2(2)}$, ... , $C_{2(Q)}$ are a determination sequence including Q representative evaluation values.

Equation (1) above includes a well-known normal distribution equation. That is, the determination model f of the present embodiment corresponds to a product obtained by multiplying together Q normal distributions based on the average $\mu$ and the standard deviation $\sigma$ of N representative evaluation values of the initial sequence, where Q is the number of the representative evaluation values in the determination sequence.

It is confirmed by an experiment by the inventors that an output when such a determination model f is used shows substantially the same transition as that in the graph of Fig. 8 of the first embodiment. That is, the output of the determination model f may be handled in much the same way as the probability of occurrence of a sequence including Q representative evaluation values (in other words, atypicality).

In the present embodiment, it is possible to obtain a model by evaluating the average $\mu$ and the standard deviation $\sigma$ of the initial sequence. The average $\mu$ and the standard deviation $\sigma$ calculated by the determination model creation unit 67 are stored in the determination model storage unit 59 as parameters defining the determination model.

Although a product of normal distributions is used in the determination model f shown in Equation (1), a product or a sum of logarithms of normal distributions may be used. Alternatively, a sum of normal distributions may be used. According to an experiment of the inventor, when a sum is used (however, logarithmic transformation is not performed), the transition of the output of the determination model f tends to fluctuate more roughly than when the product is used, but it is sufficiently possible to grasp the symptoms of failure.

As described above, in the robot failure symptom detection apparatus 5 of the present embodiment, the determination model is a product or total sum obtained by multiplying or summing together Q normal distributions based on a standard deviation $\sigma$ and an average value evaluated from N representative evaluation values of the initial sequence. Further, the logarithmization may be performed during the processing or on a final value.

As a result, it is possible to create the determination model with a small amount of calculation.

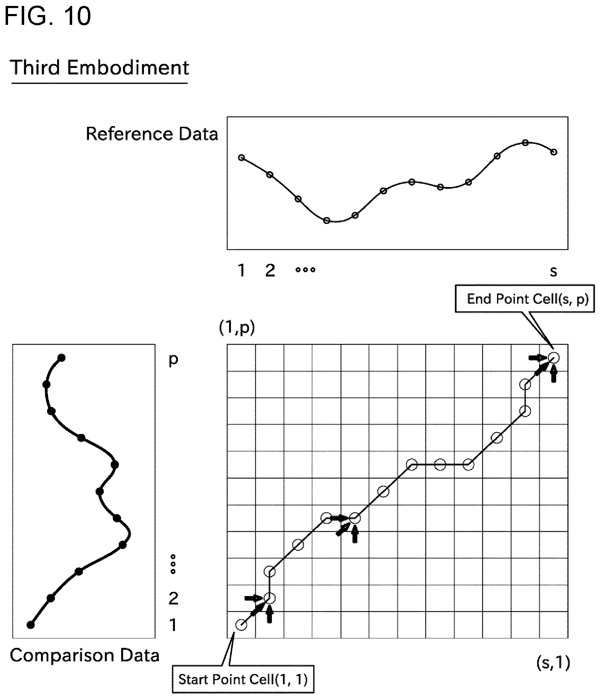

Next, a third embodiment will be described. Fig. 10 is a conceptual diagram illustrating a DTW method.

The robot failure symptom detection apparatus 5 of the present embodiment is characterized in an evaluation value calculation performed by the evaluation value calculation unit 52. The evaluation value calculation unit 52 obtains a value such as DTW distance based on the DTW method from the current value time-sequence data acquired by the current value time-sequence data acquisition unit 51, and uses the value as the evaluation value. DTW is an abbreviation for Dynamic Time Warping. In the present embodiment, portions other than the processing performed by the evaluation value calculation unit 52 are substantially the same as those in the above-described first embodiment.

Here, the DTW method will be briefly described. The DTW method is used to calculate a degree of similarity between two time-sequence data. As a main characteristic of the DTW method, non-linear expansion and contraction of the time-sequence data in a direction of a time axis is allowed in calculating the degree of similarity. As a result, in the DTW method, it is possible to obtain a result close to human intuition regarding the degree of similarity of time-sequence data.

The evaluation value calculation unit 52 outputs, as the evaluation value of the current value time-sequence data to be processed, a DTW distance (dissimilarity) indicating magnitude of a difference between reference current value time-sequence data (reference behavior time-sequence data) and comparison current value time-sequence data (comparison time-sequence data).

Examples of the reference current value time-sequence data include the current value time-sequence data acquired by the current value time-sequence data acquisition unit 51 when test operation of the robot 1 is performed at the start of use of the robot failure symptom detection apparatus 5. Examples of the comparison current value time-sequence data include the current value time-sequence data acquired by the current value time-sequence data acquisition unit 51 after the Day 1 when the use of the robot failure symptom detection apparatus 5 is started. The reference data may be acquired, for example, on the Day 1.

The principle of the DTW method will be described with reference to Fig. 10. A plurality (s) of current values included in the reference data are arranged in chronological order along a first axis extending in a horizontal direction. A plurality (p) of current values included in the comparison data are arranged in chronological order along a second axis extending in a vertical direction.

Subsequently, $s \times p$ cells arranged in a matrix are defined on a plane defined by the vertical and horizontal axes. Each cell (1, m) represents correspondence between an l-th current value in the reference data and an m-th current value in the comparison data. Here, $1 \leq 1 \leq s$ and $1 \leq m \leq p$.

Each cell (l, m) is associated with a numerical value representing a difference between the l-th current value in the reference data and the m-th current value in the comparison data. In the present embodiment, each cell is stored with an absolute value of the difference between the l-th current value and the m-th current value that is associated with the cell.

The evaluation value calculation unit 52 evaluates a warping path (route) from a start point cell located at a lower left corner of a matrix in Fig. 10 to an end point cell located at an upper right corner.

A start point cell (1, 1) corresponds to correspondence between a current value at an earliest timing (that is, first current value) in the time sequence, of s current values in the reference data, and a current value at an earliest timing (that is, a first current value) in the time sequence, of p current values in the comparison data.

An end point cell (s, p) corresponds to correspondence between a current value at a last timing (that is, an s-th current value) in the time sequence, of the s current values in the reference data, and a current value at a last timing (that is, a p-th current value) in the time sequence, of the p current values in the comparison data.

In the $s \times p$ matrix constructed as described above, a path starting from the start point cell and reaching the end point cell is considered according to the following rules [1] and [2]. [1] It is possible to move only to adjacent cells vertically, horizontally, or diagonally. [2] It is not possible to move in a backward direction of a time of the reference data, and it is not possible to move in a backward direction of a time of the comparison data.

Such a sequence of cells is called a path or warping path. A warping path indicates how the s current values in the reference data are associated with the p current values in the comparison data. From another point of view, the warping path represents how the two time-sequence data are expanded or contracted along the time axis.

It is possible to consider a plurality of warping paths from the start point cell to the end point cell. The evaluation value calculation unit 52 evaluates, from among possible warping paths, a warping path having the smallest total amount of numerical values representing differences associated with the passing cells (in the present embodiment, an absolute value of a difference between the l-th current value and the m-th current value). Such a warping path may be hereinafter called an optimal warping path. A total amount of values in each square in such an optimal warping path may be called a DTW distance.

When the DTW distance is divided by the number of squares to be passed through, it is possible to evaluate a DTW distance average value. The DTW distance average value may be evaluated by dividing the DTW distance by the number of elements s or p of either one of the time-sequence data. Instead of the DTW distance, the DTW distance average value may also be used as the evaluation value.

If s and p are large, a huge number of warping paths may be generated. Therefore, if all the conceivable warping paths are taken into consideration, an amount of calculation for evaluating the optimal warping path increases explosively. To solve this problem, the evaluation value calculation unit 52 of the present embodiment evaluates the optimal warping path by using a DP matching method (dynamic programming). DP is an abbreviation for Dynamic Programming. The DP matching method is known, and thus, the explanation is omitted.

The DTW distance or the DTW distance average value is calculated by the evaluation value calculation unit 52 for each of the current value time-sequence data acquired by the current value time-sequence data acquirer 51. The representative evaluation value generated by the representative evaluation value generation unit 53 is, for example, a median value of a large number of DTW distances or DTW distance average values obtained in a single day. A sequence of representative evaluation values is generated by the sequence processing unit 54 and input to the determination unit 55 as the initial sequence or the determination sequence.

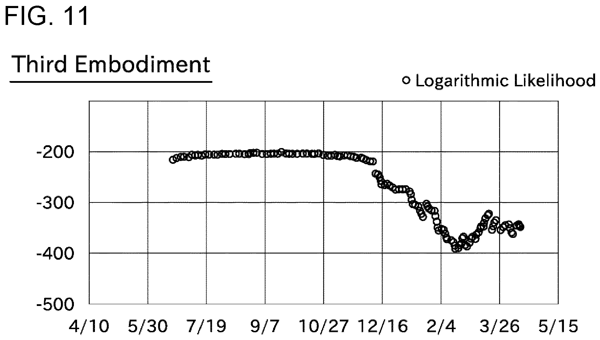

A graph of Fig. 11 shows a transition of a logarithmic likelihood obtained in the present embodiment. As shown in the graph, in the present embodiment, as in the first embodiment, a symptom of failure clearly begins to appear around December 16th.

As described above, in the robot failure symptom detection apparatus 5 of the present embodiment, the evaluation value calculation unit 52 calculates, as the evaluation value, either one of the DTW distance and the DTW distance average value with respect to predetermined reference current value time-sequence data, for each of the current value time-sequence data acquired by the current value time-sequence data acquisition unit 51.

As a result, it is possible to easily grasp a changing tendency of the time-sequence data of the current value.

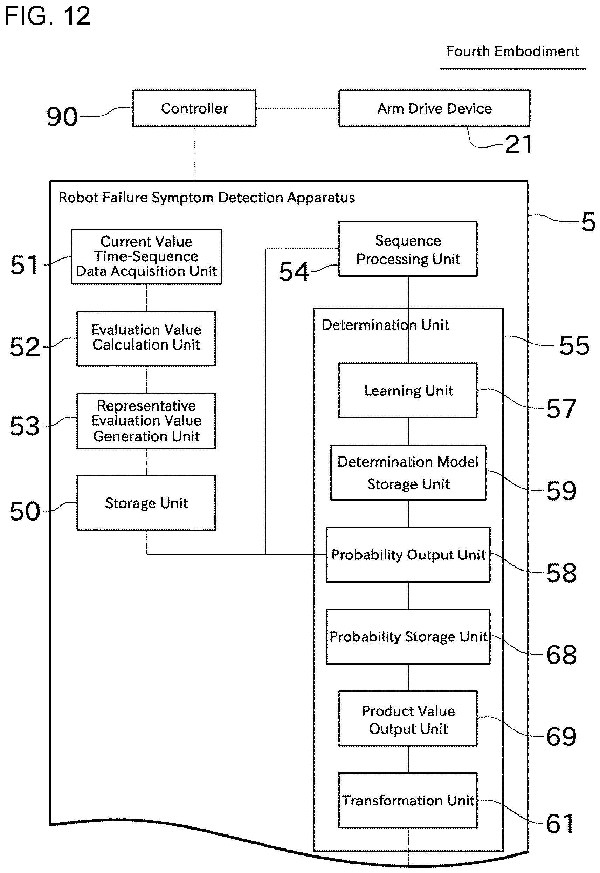

Next, a fourth embodiment will be described. Fig. 12 is a block diagram schematically illustrating an electrical configuration of the robot failure symptom detection apparatus 5 according to the fourth embodiment.

The robot failure symptom detection apparatus 5 of the present embodiment corresponds to a modification of the first embodiment shown in Fig. 2.

The determination unit 55 of the present embodiment includes the learning unit 57, the probability output unit 58, the determination model storage unit 59, and the transformation unit 61, as in the first embodiment. The determination unit 55 further includes a probability storage unit 68 and a product value output unit 69.

As in the first embodiment, the learning unit 57 of the present embodiment trains the Hidden Markov Model with the initial sequence. The obtained parameter of the Hidden Markov Model is stored in the determination model storage unit 59.

As described above, in the first embodiment illustrated in Fig. 2, during the monitoring period (that is, after Day (N + 1)), the determination model of the determination unit 55 is input with a sequence including Q representative evaluation values from the sequence processing unit 54 every day. On the other hand, in the present embodiment illustrated in Fig. 12, the determination model of the determination unit 55 is input, as the determination data, with only one representative evaluation value obtained on a given day, every day, from the storage unit 50. In the present embodiment, such one representative evaluation value corresponds to determination data.

Generally, the Hidden Markov Model is often used to evaluate the sequence data. However, the Ergodic Hidden Markov Model trained with the initial sequence is capable of outputting a value that may be treated as a probability even when the representative evaluation value is input in an evaluation phase in a single form instead of a sequence.

The probability output unit 58 outputs an output result (that is, a probability) of the determination model when one representative evaluation value is input to the determination model. The probability output by the probability output unit 58 is stored in the probability storage unit 68.

The probability storage unit 68 is capable of storing a probabilities, for the most recent U days, output by the determination model after the Day (N + 1).

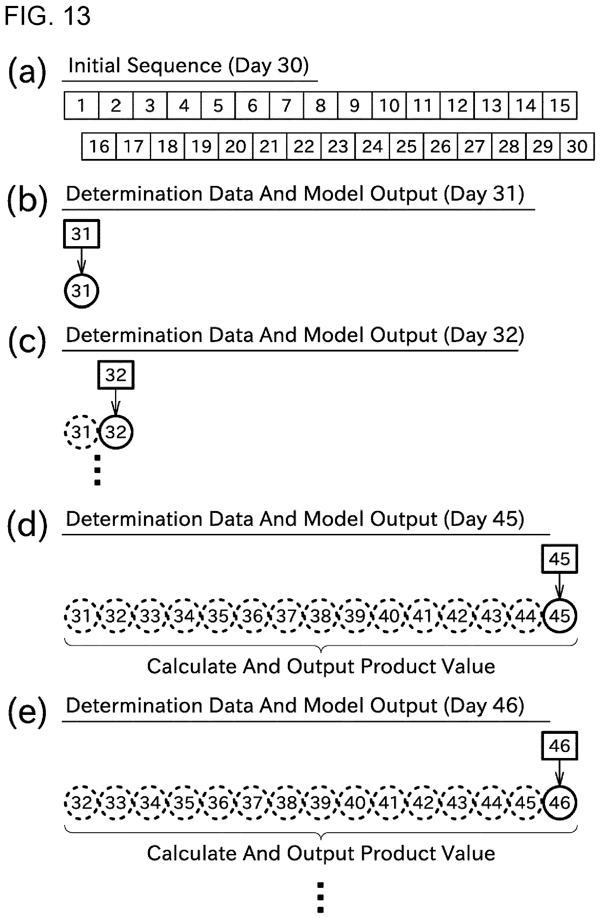

Figs. 13(a) to 13(e) illustrate a initial sequence and determination data in the present embodiment when N = 30 and U = 15. On the 30th day, the learning unit 57 trains the Hidden Markov Model with a sequence including 30 representative evaluation values shown in Fig. 13(a). Thus, the determination model is created.

As shown in Fig. 13(b), on the Day 31, one representative evaluation value for the Day 31 is input to the determination model, and a probability output by the determination model is stored. As shown in Fig. 13(c), on the Day 32, one representative evaluation value for the Day 32 is input to the determination model, and a probability output by the determination model is stored. In Figs. 13(b) to 13(e), one circle represents one probability output by the determination model. A number inside the circle indicates the day on which the representative evaluation value corresponding to the probability is acquired. If the circle is indicated by a dashed line, it means the probability is stored in the past.

The determination unit 55 performs processing of inputting one representative evaluation value obtained on a day to the determination model and storing the probability output by the determination model every day. As a result, on the 45th day, the probabilities for 15 days are stored in the probability storage unit 68, as shown in Fig. 13(d).

On Day 45, the product value output unit 69 multiplies all the probabilities for 15 days from the Day 31 to the Day 45 day stored in the probability storage unit 68, as shown in Fig. 13(d). In the present embodiment, the product value thus obtained corresponds to the atypicality. The product value output by the product value output unit 69 is logarithmically transformed by the transformation unit 61 and output from the determination unit 55.

On Day 46, in the probability storage unit 68, the oldest probability of the Day 31 is deleted and a probability on the Day 46 is stored. The product value output unit 69 multiplies all the probabilities for 15 days from the Day 32 to the Day 46 stored in the probability storage unit 68 as shown in Fig. 13(e). The product value thus obtained is logarithmically transformed by the transformation unit 61 and output from the determination unit 55.

In the present embodiment, the output from the determination unit 55 is substantially started from the Day 45. According to the configuration of the present embodiment, as in the first embodiment and the second embodiment, it is possible to favorably grasp the symptom of failure.

In the present embodiment, the determination unit 55 outputs the product value in a logarithmically transformed form, but may output the total sum value, which is a value obtained by adding all the probabilities for the most recent 15 days, as the atypicality. In this case, the logarithmic transformation may be omitted.

The probability storage unit 68 may be omitted. In this case, model output values for the days from the Day 31 to the Day 45 may be calculated at once on the Day 45.

As described above, in the present embodiment, after the initial operation, the determination unit 55 inputs only one representative evaluation value as the determination data into the determination model, for each data collection unit period, and acquires the output of the determination model. The determination unit 55 acquires the atypicality, based on a product or a total sum obtained by multiplying or summing together outputs of the determination model for a plurality of the most recent data collection unit periods.

With this configuration as well, it is possible to favorably detect the symptom of failure of the robot 1.

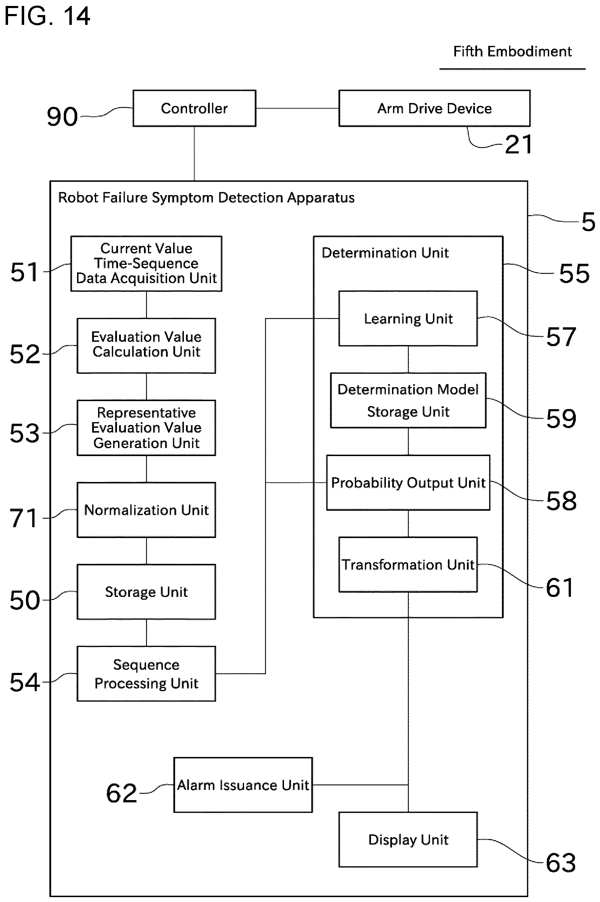

Next, a fifth embodiment will be described. Fig. 14 is a block diagram schematically illustrating an electrical configuration of the robot failure symptom detection apparatus 5 according to the fifth embodiment.

The robot failure symptom detection apparatus 5 of the present embodiment further includes a normalization unit 71. The normalization unit 71 is used to normalize the representative evaluation value to be input to the Hidden Markov Model (determination model).

Here, normalization will be described. Simply speaking, the normalization means that transforming numerical values included in a data group so that a minimum value is 0, a maximum value is 1, and the numerical values between such values are proportionally distributed between 0 and 1.

The normalization unit 71 of the present embodiment evaluates the minimum value and the maximum value from, for example, 30 representative evaluation values during the initial operation period, and normalizes each representative evaluation value based on such values. The normalized values are stored in the storage unit 50 and used by the sequence processing unit 54 to create the initial sequence and the determination sequence.

As another method of normalization, the data set may be transformed to have a normal distribution with a mean of 0 and a variance of 1.

As described above, the current value time-sequence data is acquired for motors of each axis of the robot 1. In an example of an actual robot, an average current value of a wrist axis motor is about 3A, while an average current value of a main axis motor is about 20A. The magnitude of the current value naturally affects the representative evaluation value. Thus, the representative evaluation values may differ greatly among the axes, but it is complicated to determine a threshold, which is a condition for issuing an alarm, for each axis. Depending on the model of the robot, the size (large or small), a payload, speed, and the like differ, and the current value varies accordingly.

In the present embodiment, such differences may be eliminated by normalization, and uniform determination may be performed. The inventors of the present application often found the fact that when the representative evaluation values are normalized, the logarithmic likelihood falls within the range of -50 to 10 in a normal case, but if an abnormality occurs, the logarithmic likelihood decreases to around -500. Therefore, if a value of about -100 is set as a uniform threshold for the logarithmic likelihood, it is generally considered appropriate for detection of the symptom of failure. In other words, individual abnormality determination thresholds are rendered unnecessary.

As described above, in the robot failure symptom detection apparatus 5 of the present embodiment, the representative evaluation values to be input to the determination model are normalized.

As a result, it is possible to make a uniform determination on the current value time-sequence data obtained from various motors.

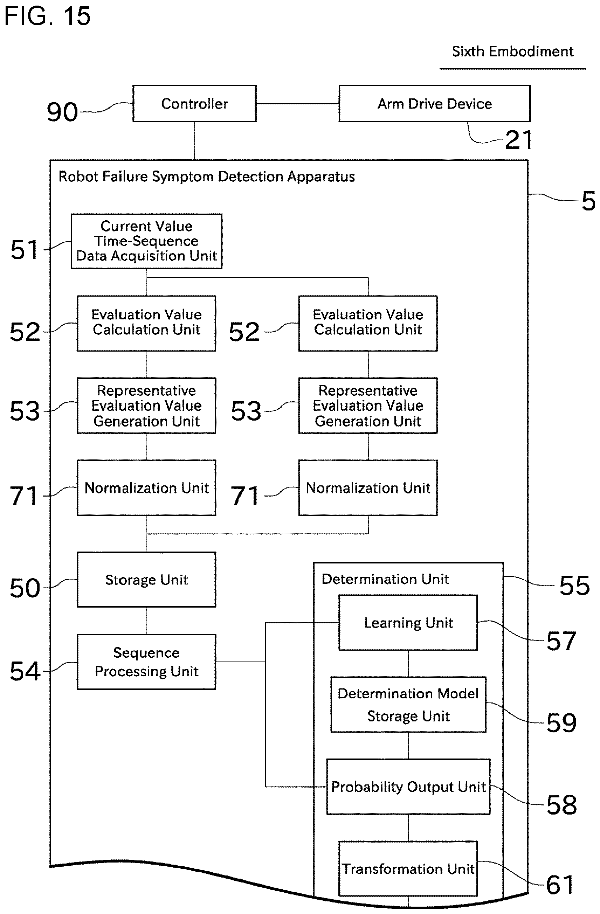

Next, a sixth embodiment will be described. Fig. 15 is a block diagram schematically illustrating an electrical configuration of the robot failure symptom detection apparatus 5 according to the sixth embodiment.

As shown in Fig. 15, the robot failure symptom detection apparatus 5 of the present embodiment includes two evaluation value calculation units 52, two representative evaluation value generation units 53, and two normalization units 71. Otherwise, the present embodiment is substantially the same as the first embodiment described above.

The two evaluation value calculation units 52 use different functions to calculate the evaluation value of the current value time-sequence data. For example, one evaluation value calculation unit 52 may calculate a root mean square, and the other evaluation value calculation unit 52 may calculate a maximum value.

Accordingly, the Hidden Markov Model used in the determination unit 55 is configured to receive a two-dimensional vector sequence including two types of evaluation values to calculate the probability. As a result, it is possible to detect the symptom of failure in such a manner that a plurality of evaluation values are taken into consideration.

The representative evaluation value representing each evaluation value is normalized by the normalization unit 71. This makes it possible to equalize an influence of each of the plurality of evaluation values. Each of the normalized representative evaluation values may be multiplied by a scaling factor determined for weighting. As a result, for example, it is possible to determine the symptom of failure in such a manner that the root mean square value is emphasized rather than the maximum value. The normalization unit 71 may be omitted.

Fig. 15 illustrates a case where two types of evaluation values are calculated for current value time-sequence data. However, the robot failure symptom detection apparatus 5 may be configured to acquire three or more types of evaluation values. In such a case, the Hidden Markov Model is input with a sequence of vectors of three or more dimensions.

Although the model f, that is, Equation (1), is a one-dimensional model, the normal distribution model can also be adapted to receive multi-dimensional inputs as in the Hidden Markov Model, by preparing a plurality of models f, that is, Equations (1), for each evaluation value and performing multiplication or summation.

As described above, in the robot failure symptom detection apparatus 5 of the present embodiment, the evaluation value calculation unit 52 calculates a plurality of types of evaluation values by using different methods, for each of the current value time-sequence data acquired by the current value time-sequence data acquisition unit 51. The representative evaluation value generation unit 53 generates a plurality of types of representative evaluation values for each data collection unit period. The determination model is a model allowing for input of multi-dimensional sequence.

As a result, it is possible to grasp the symptom of failure in such a manner that a plurality of evaluation values are taken into consideration.

In the robot failure symptom detection apparatus 5 of the present embodiment, the evaluation value calculation unit 52 calculates the root mean square and the maximum value of the current value time-sequence data. However, instead of one or both of the root mean square and the maximum value, any of the value range, the frequency analysis integrated value, the DTW distance, and the DTW distance average value may be calculated.

In the robot failure symptom detection apparatus 5 of the present embodiment, the evaluation value calculation unit 52 calculates the root mean square and the maximum value of the current value time-sequence data. However, instead of both of the root mean square and the maximum value, two frequency analysis partial integration values may be calculated. It is possible to configure to acquire three or more types of evaluation values. In such a case, the Hidden Markov Model is input with a sequence of vectors having three or more dimensions. As shown in Fig. 18, five partial integrated values may be calculated.

As a result, it is possible to favorably evaluate a change in the current value time-sequence data.

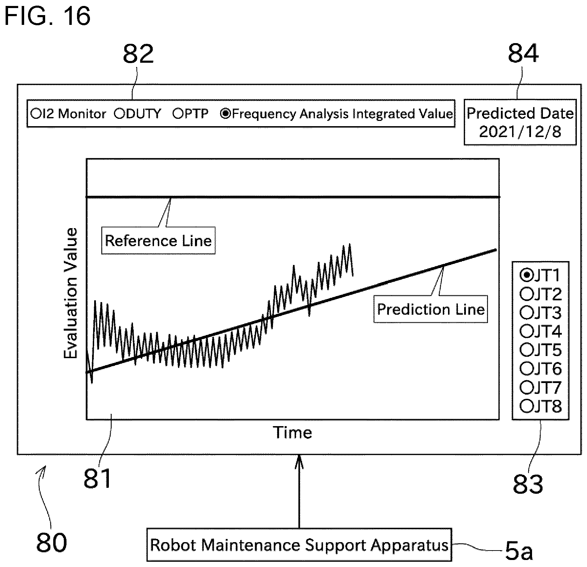

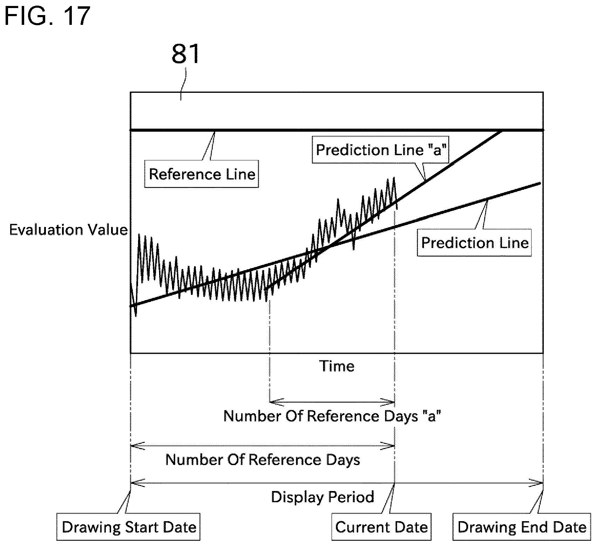

Next, an example of predicting failure timing of the robot 1 without using the determination model will be described. Processing described in the present example is performed by a robot maintenance support apparatus 5a illustrated in Fig. 16. The robot maintenance support apparatus 5a is basically configured similarly to the robot failure symptom detection apparatus 5. The robot maintenance support apparatus 5a predicts, based on the past tendency of the evaluation value obtained based on the current value time-sequence data, a future change manner of the evaluation value and displaying such a manner on the display 80, and evaluates, based on the future change manner of the evaluation value, a predicted failure date of the robot 1. A detailed description will be provided below with reference to Fig. 16 and Fig. 17. Fig. 16 is a display example of a tendency management screen displayed on the display unit 80. Fig. 17 is a graph showing a change in a prediction line if the number of reference days is changed.

On the tendency management screen of Fig. 16, a graph display section 81, an evaluation value selection section 82, a diagnostic area selection section 83, and a predicted date display section 84 are displayed.

A horizontal axis of the graph displayed on the graph display section 81 represents a time, and a vertical axis represents an evaluation value. The method for evaluating the evaluation value is the same as in the above embodiments. The current value time-sequence data for evaluating the evaluation value may be acquired while the robot 1 is caused to perform actual work such as painting, but may also be acquired while the robot 1 is caused to perform a diagnostic operation. The diagnostic operation is an operation performed in order to perform diagnosing a state of the robot 1. It is noted that a reference line and a prediction line will be described later.

The evaluation value selection section 82 is a box for selecting the evaluation value of the graph displayed on the graph display section 81. The evaluation value selection section 82 is displayed with an I2 monitor, DUTY, PTP, and a frequency analysis integrated value, and the operator selects any one of these items.

The I2 is a root mean square of a current value. The root mean square may be referred to as an effective value or RMS. The root mean square of the current value represents a net effect of an AC component. Therefore, in the I2, fine whisker components are suppressed. Therefore, it is possible to stably detect an increase in reduction gear loss, that is, a decrease in efficiency, a decrease in torque constant due to demagnetization of the motor, and the like. The DUTY is a ratio between a motor stall current and the I2. The PTP is an abbreviation for Peak to Peak, and indicates the "value range" described above. That is, the PTP is a value obtained by subtracting the current value of a low peak from the current value of a high peak of a current waveform. The PTP, which is easy to obtain and can be used to accurately estimate a state, is often used. The frequency analysis integrated value is the value as described above. In the graphs of Figs. 16 and 17, the frequency analysis integrated value is selected and displayed as the evaluation value.

The diagnostic area selection section 83 is a box for selecting a movable axis to be diagnosed among movable axes of the robot 1. The diagnostic area selection section 83 is displayed with a plurality of movable axes of the robot 1.

The predicted date display section 84 is displayed with a predicted failure date of the robot 1. The predicted failure date is evaluated based on a reference line and a prediction line described below.

The reference line indicates a threshold of the evaluation value. The threshold is set to, for example, an effective value in an initial operation stage of the robot 1 or a value of 120% of the initial value after the running-in of the robot 1. The value of 120% of the initial value after the running-in is an example, and a value other than 120% may be used. The threshold may be empirically determined and registered. The threshold may be changed. Any initial value may be set from one data, but a value obtained by averaging a plurality of data may be set as the threshold value.

The prediction line is evaluated by applying a least square method to the evaluation value obtained in the past. The predicted failure date is a time point when the prediction line intersects the reference line. The operator is capable of intuitively grasping the state of the robot 1 by observing the prediction line. The operator is capable of grasping a specific date and time regarding the failure prediction of the robot 1 by observing the predicted failure date.

If the number of days until the predicated failure date is closer than the number of preset days (for example, 30 days), a warning may be displayed on the display 80. In the present example, the prediction line is displayed for the selected evaluation value and movable axis, but the predicted failure date may also be evaluated for a combination of an unselected evaluation value and movable axis, and if a condition is satisfied, the display 80 may display the warning.

Next, with reference to Fig. 17, changing a display mode of a graph will be described. As shown in Fig. 17, one end of a horizontal axis of a graph display section 81 is a drawing start date, and the other end of the horizontal axis is a drawing end date. A period from the drawing start date to the drawing end date corresponds to a display period of the evaluation value, the prediction line, and the like. In the present example, it is possible to change the drawing start date and the drawing end date. For example, if the drawing start date is a first number of days before the current date and the drawing end date is a second number of days after the current date, the first number of days and the second number of days may be changed independently. This allows the operator to grasp the evaluation value within a range desired by the operator.

In the present example, the number of reference days may also be changed. The number of reference days is the number of days defining a range of evaluation values used to calculate the prediction line. For example, if the number of reference days is 10 days, the prediction line is evaluated based on the evaluation values acquired from 10 days ago to the present day. The number of reference days may be changed independently of the first number of days and the second number of days described above.

A case in which the number of reference days is reduced to the number of reference days "a" will be described below. When the number of reference days is reduced, the slope of the prediction line changes. As a general tendency, the slope of the prediction line is steeper when the number of reference days is reduced. Also in Fig. 17, the slope of a prediction line "a" is steeper than the slope of the prediction line. As a result of a change in the slope of the prediction line, a time at which the prediction line intersects with the reference line changes, and thus, the predicted failure date changes. By providing a function of changing the number of reference days, the predicted failure date may be evaluated from various viewpoints.

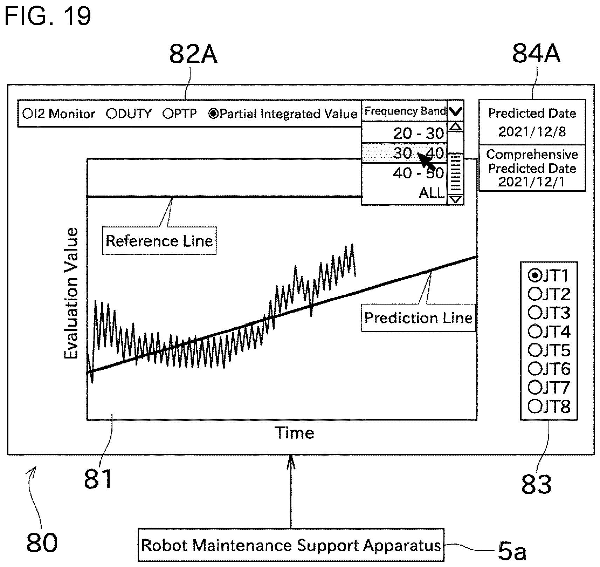

Instead of the frequency analysis integrated value, a plurality of partial integrated values may be used. A plurality of tendency management functions are provided to support a plurality of evaluation values. Fig. 19 illustrates a tendency management screen displayed in an example that supports the partial integrated values. It is noted that in Fig. 19, explanations of components having the same functions as in Fig. 16 may be omitted.

An evaluation value selection section 82A of Fig. 19 is displayed with the I2 monitor, the DUTY, the PTP, and the partial integration value. Next to the partial integrated value, a pull-down menu for selecting a frequency band is displayed. The frequency bands selectable by using the evaluation value selection section 82A are 0-10, 10-20, 20-30, 30-40, 40-50, and ALL. ALL is a sum of all the partial integrated values, and as a result, the same display as the frequency analysis integrated value is provided. A display method of Fig. 19 is an example, and may be changed. For example, the frequency analysis integrated value may be added to the evaluation value selection section 82A, and ALL may be omitted from the menu for selecting the frequency band.

The reference line indicates a threshold of the evaluation value. In the description of the example shown using Fig. 16, 120% of the initial value after the running-in of the robot 1 is set as the threshold. In the example shown using Fig. 19, the threshold may be changed according to the frequency band. For example, a threshold when the frequency band is ALL or 0-10 may be set to 120% of the initial value, and a threshold when the frequency band is 20-30, 30-40, and 40-50 may be set to 200% of the initial value. It is noted that the prediction line is evaluated by applying a least square method to evaluation values during the reference period out of the evaluation values obtained in the past.

In calculating the number of days until the predicted failure date, the predicted failure date is calculated for any combination of the evaluation value, the movable axis, and the frequency band. In the example shown in Fig. 19, a predicted date display section 84A is displayed not only with the above-described predicted date but also with a comprehensive predicted date. The comprehensive predicted date may be the earliest combination of a plurality of predicted dates calculated based on a plurality of partial integrated values, and may be the earliest predicted day when including other types of evaluation values and movable axes. If the number of days until the comprehensive predicted date is closer than the number of preset days and thus the warning is displayed, a current screen may be automatically switched to a screen displayed with a combination of the evaluation value, the frequency band, and the movable axes, corresponding to a date displayed in the comprehensive predicted date. In such a case, if a display such as "switch to a condition where the warning is displayed" is added, the operator is easily capable of understanding a reason why the screen is changed.

Thus, the robot maintenance support apparatus 5a performs processing of acquiring the current value time-sequence data of a driving current for each movable axis of the robot 1 from the robot operation, for each data collection unit period. The robot maintenance support apparatus 5a performs frequency analysis on each of the current time-sequence data to evaluate a frequency spectrum and evaluate a partial integrated value that is a partial sum of the frequency spectrum, for each of a plurality of predefined frequency bands. The robot maintenance support apparatus 5a estimates a future change tendency of each movable axis, based on a plurality of partial integrated values within a preset reference period. Furthermore, the robot maintenance support apparatus 5a estimates a predicted service life of each movable axis, based on a predicted time until the partial integrated value reaches a predetermined threshold value. The robot maintenance support apparatus 5a is also capable of issuing a warning, based on a time period (number of days) until the predicted service life. A function of issuing a warning is not an essential constituent component and may be omitted.

Although the preferred embodiments of the present application have been described above, the above configuration may be modified, for example, as follows.

In using the Ergodic Hidden Markov Model, the number of representative evaluation values may differ between the initial sequence and the determination sequence. For example, while the number of representative evaluation values in the initial sequence may be 30, the number of representative evaluation values in the determination sequence may be 50. In such a case, in the daily determination sequence updating processing performed from the Day 31 to the Day 50, the sequence processing unit 54 only performs addition of the latest representative evaluation value. After Day 51, the oldest representative evaluation value is deleted as the latest representative evaluation value is added. Input of the determination sequence into the determination model is possible on Day 50 or later. If it is acceptable for the determination sequence to be shorter than usual, input of the determination sequence into the determination model may be started on the Day 31.

The determination model based on the normal distribution of the second embodiment may be combined with the fifth embodiment and the sixth embodiment.

The DTW method of the third embodiment may be combined with the fourth embodiment, the fifth embodiment, and the sixth embodiment.

A logarithmic likelihood graph displayed on the display unit 63 may be displayed in a vertically inverted manner. For example, when the logarithmic likelihood output by the transformation unit 61 is multiplied by -1 to change the sign of the value and the value is output to the display unit 63, vertical inversion may be substantially realized. Such a value increases as the similarity between the two sequence decreases, and thus, it is intuitively easy to understand as a value representing the degree of abnormality.

The transformation unit 61 may be omitted. That is, the probability output by the determination unit 55 may be compared with a threshold value or displayed on the display unit 63 without being logarithmically transformed.

The robot failure symptom detection apparatus 5 may be realized by the same hardware as the controller 90.

The functions of the elements disclosed herein may be executed by using a circuit or a processing circuit including a general purpose processor, a dedicated processor, an integrated circuit, Application Specific Integrated Circuits (ASICs), conventional circuitry configured or programmed to perform the disclosed functions, and/or any combination of such devices. Such a processor, which includes a transistor and other circuits, is considered the processing circuit or the circuit. In the present disclosure, a circuit, a unit, or means is hardware configured to perform or programmed to perform the recited functions. The hardware may be the hardware disclosed herein, or other known hardware programmed or configured to perform the recited functions. If the hardware is a processor that may be considered a type of circuit, the circuit, the means, or the unit is a combination of hardware and software, and the software is used to configure the hardware and/or the processor.

**Claims**

1. A robot failure symptom detection apparatus for detecting a symptom of failure of a robot, the robot failure symptom detection apparatus comprising:

a behavior time-sequence data acquisition unit configured to perform processing of acquiring behavior time-sequence data relating to a motor of a joint of the robot from a robot operation, for each data collection unit period;
an evaluation value calculation unit configured to calculate an evaluation value for the behavior time-sequence data acquired by the behavior time-sequence data acquisition unit;
a representative evaluation value generation unit configured to generate a representative evaluation value representing the evaluation values, from the evaluation values obtained by the evaluation value calculation unit, for each data collection unit period;
a sequence processing unit configured to generate a sequence of the representative evaluation values; and
a determination unit configured to create a determination model, based on an initial sequence generated by the sequence processing unit, during an initial operation of the robot, and after the initial operation, to input determination data including data based on a robot operation after the initial operation into the created determination model to acquire atypicality of the determination data.

2. The robot failure symptom detection apparatus according to claim 1, wherein

after the initial operation, the determination unit inputs, as the determination data, a determination sequence including a plurality of representative evaluation values to the determination model, for each data collection unit period to acquire the atypicality, based on output of the determination model,
to generate the determination sequence, the sequence processing unit initializes the determination sequence with the initial sequence, and subsequently, performs update processing on the determination sequence each time the representative evaluation value is generated, and
the update processing includes processing of adding the representative evaluation value of the data collection unit period to the determination sequence not updated yet.

3. The robot failure symptom detection apparatus according to claim 1, wherein
after the initial operation, the determination unit inputs, as the determination data, only one representative evaluation value into the determination model to acquire output of the determination model, for each data collection unit period, and acquires the atypicality, based on a product or a total sum obtained by multiplying or summing together outputs of the determination model for a plurality of the most recent data collection unit periods.

4. The robot failure symptom detection apparatus according to any one of claims 1 to 3, wherein
the determination model is Hidden Markov Model trained with the initial sequence.

5. The robot failure symptom detection apparatus according to claim 4, wherein
the Hidden Markov Model is Ergodic Hidden Markov Model.

6. The robot failure symptom detection apparatus according to claim 1 or 2, wherein

the determination model is Left-to-Right Hidden Markov Model trained with the initial sequence,
the initial sequence is a sequence in which N representative evaluation values are arranged in chronological order, and
the determination data is the determination sequence in which N representative evaluation values are arranged in chronological order.

7. The robot failure symptom detection apparatus according to claim 1 or 2, wherein
the determination model is a product or total sum obtained by multiplying or summing together Q normal distributions based on a standard deviation and an average value evaluated from N representative evaluation values of the initial sequence.

8. The robot failure symptom detection apparatus according to any one of claims 1 to 7, wherein
the evaluation value is any one of a root mean square, a maximum value, a value range, and a frequency analysis integrated value of the behavior time-sequence data.

9. The robot failure symptom detection apparatus according to any one of claims 1 to 8, wherein
the evaluation value calculation unit calculates, as the evaluation value, one of a DTW distance and a DTW distance average value with respect to predetermined reference behavior time-sequence data, for each of the behavior time-sequence data acquired by the behavior time-sequence data acquisition unit.

**10.** The robot failure symptom detection apparatus according to any one of claims 1 to 9, wherein the representative evaluation value input to the determination model is normalized.

**11.** The robot failure symptom detection apparatus according to any one of claims 1 to 9, wherein

the evaluation value calculation unit calculates a plurality of types of the evaluation values by different methods, for each of the behavior time-sequence data acquired by the behavior time-sequence data acquisition unit,
the representative evaluation value generation unit generates a plurality of types of the representative evaluation values for each data collection unit period, and
the determination model is a model configured to receive input of a multi-dimensional sequence as the initial sequence.

**12.** The robot failure symptom detection apparatus according to claim 11, wherein the plurality of types of evaluation values include one or more of a root mean square, a maximum value, a value range, a frequency analysis integrated value, a DTW distance, and a DTW distance average value of the behavior time-sequence data.

**13.** The robot failure symptom detection apparatus according to any one of claims 1 to 9, wherein

the evaluation value calculation unit performs frequency analysis on each of the behavior time-sequence data acquired by the behavior time-sequence data acquisition unit to evaluate a frequency spectrum, and evaluates, as the representative evaluation values, a plurality of partial sums of the frequency spectrum, for a plurality of previously determined frequency bands,
the representative evaluation value generation unit generates a plurality of the representative evaluation values for each data collection unit period, and
the determination model is a model configured to receive input of a multi-dimensional sequence as the initial sequence.

**14.** The robot failure symptom detection apparatus according to claim 11 or 12, wherein at least one of the plurality of types of representative evaluation values input to the determination model is normalized.

**15.** The robot failure symptom detection apparatus according to any one of claims 1 to 14, wherein the data collection unit period is determined to be an integral multiple of an environmental temperature change cycle, a work cycle, or a robot operation cycle.

**16.** The robot failure symptom detection apparatus according to any one of claims 1 to 15, comprising: a display unit configured to display the atypicality outputted by the determination unit.

**17.** The robot failure symptom detection apparatus according to any one of claims 1 to 16, wherein the determination unit outputs the atypicality in a logarithmically transformed form.

**18.** The robot failure symptom detection apparatus according to any one of claims 1 to 17, comprising: an alarm issuance unit configured to issue an alarm of a symptom of failure when the atypicality output by the determination unit is out of a predetermined range.

**19.** A robot failure symptom detection method for detecting a symptom of failure of a robot, the method comprising:

a behavior time-sequence data acquisition step of performing, for each data collection unit period, processing of acquiring behavior time-sequence data related to a motor of a joint of the robot, from a robot operation;
an evaluation value calculation step of calculating an evaluation value for the behavior time-sequence data acquired in the behavior time-sequence data acquisition step;
a representative evaluation value generation step of generating, for each data collection unit period, a representative evaluation value representing the evaluation values, from the evaluation values obtained in the evaluation value calculation step;
a sequence processing step of generating a sequence of the representative evaluation values;
a model creation step of creating a determination model, based on an initial sequence generated in the sequence processing step, during an initial operation of the robot; and
a determination step of inputting, after the initial operation, determination data including data based on a robot operation after the initial operation into the created determination model to acquire atypicality of the determination data.

FIG. 1

FIG. 2

90 — | Controller | — | Arm Drive Device | — 21

Robot Failure Symptom Detection Apparatus — 5

51 — | Current Value Time-Sequence Data Acquisition Unit |

Determination Unit — 55

52 — | Evaluation Value Calculation Unit |

| Learning Unit | — 57

53 — | Representative Evaluation Value Generation Unit |

| Determination Model Storage Unit | — 59

50 — | Storage Unit |

| Probability Output Unit | — 58

54 — | Sequence Processing Unit |

| Transformation Unit | — 61

62 — | Alarm Issuance Unit |

| Display Unit | — 63

24

# FIG. 3

FIG. 4

(a)

(b)

FIG. 5

# FIG. 6

## (a) Initial Sequence (Day 30)

| 1 | 2 | 3 | 4 | 5 | 6 | 7 | 8 | 9 | 10 | 11 | 12 | 13 | 14 | 15 |
|---|---|---|---|---|---|---|---|---|----|----|----|----|----|----|

| 16 | 17 | 18 | 19 | 20 | 21 | 22 | 23 | 24 | 25 | 26 | 27 | 28 | 29 | 30 |
|----|----|----|----|----|----|----|----|----|----|----|----|----|----|----|

## (b) Determination Sequence (Day 31)

| 2 | 3 | 4 | 5 | 6 | 7 | 8 | 9 | 10 | 11 | 12 | 13 | 14 | 15 | 16 |
|---|---|---|---|---|---|---|---|----|----|----|----|----|----|----|

| 17 | 18 | 19 | 20 | 21 | 22 | 23 | 24 | 25 | 26 | 27 | 28 | 29 | 30 | 31 |
|----|----|----|----|----|----|----|----|----|----|----|----|----|----|----|

## (c) Determination Sequence (Day 32)

| 3 | 4 | 5 | 6 | 7 | 8 | 9 | 10 | 11 | 12 | 13 | 14 | 15 | 16 | 17 |
|---|---|---|---|---|---|---|----|----|----|----|----|----|----|----|

| 18 | 19 | 20 | 21 | 22 | 23 | 24 | 25 | 26 | 27 | 28 | 29 | 30 | 31 | 32 |
|----|----|----|----|----|----|----|----|----|----|----|----|----|----|----|

## (d) Determination Sequence (Day 33)

| 4 | 5 | 6 | 7 | 8 | 9 | 10 | 11 | 12 | 13 | 14 | 15 | 16 | 17 | 18 |
|---|---|---|---|---|---|----|----|----|----|----|----|----|----|----|

| 19 | 20 | 21 | 22 | 23 | 24 | 25 | 26 | 27 | 28 | 29 | 30 | 31 | 32 | 33 |
|----|----|----|----|----|----|----|----|----|----|----|----|----|----|----|

⋮

## (e) Determination Sequence (Day 50)

| 21 | 22 | 23 | 24 | 25 | 26 | 27 | 28 | 29 | 30 | 31 | 32 | 33 | 34 | 35 |
|----|----|----|----|----|----|----|----|----|----|----|----|----|----|----|

| 36 | 37 | 38 | 39 | 40 | 41 | 42 | 43 | 44 | 45 | 46 | 47 | 48 | 49 | 50 |
|----|----|----|----|----|----|----|----|----|----|----|----|----|----|----|

⋮

## FIG. 7

### Comparative Example

## FIG. 8

### First Embodiment

## FIG. 9

Second Embodiment

**90** — Controller —— Arm Drive Device —**21**

**Robot Failure Symptom Detection Apparatus** —**5**

**51** — Current Value Time-Sequence Data Acquisition Unit

**52** — Evaluation Value Calculation Unit

**53** — Representative Evaluation Value Generation Unit

**50** — Storage Unit

**54** — Sequence Processing Unit

**Determination Unit** —**55**

**Determination Mode Creation Unit** —**67**

**Determination Model Storage Unit** —**59**

**Probability Output Unit** —**58**

**Transformation Unit** —**61**

**62** — Alarm Issuance Unit

**Display Unit** —**63**

# FIG. 10

Third Embodiment

Reference Data

1  2  ∘∘∘                    s

End Point Cell(s, p)

(1,p)

p

Comparison Data

Start Point Cell(1, 1)

(s,1)

# FIG. 11

## Third Embodiment

o Logarithmic Likelihood

# FIG. 12

90 — Controller — Arm Drive Device — 21

Robot Failure Symptom Detection Apparatus — 5

51 — Current Value Time-Sequence Data Acquisition Unit

54 — Sequence Processing Unit

52 — Evaluation Value Calculation Unit

Determination Unit — 55

53 — Representative Evaluation Value Generation Unit

Learning Unit — 57

Determination Model Storage Unit — 59

50 — Storage Unit

Probability Output Unit — 58

Probability Storage Unit — 68

Product Value Output Unit — 69

Transformation Unit — 61

# FIG. 13

**(a)** Initial Sequence (Day 30)

| 1 | 2 | 3 | 4 | 5 | 6 | 7 | 8 | 9 | 10 | 11 | 12 | 13 | 14 | 15 |
|---|---|---|---|---|---|---|---|---|----|----|----|----|----|----|

| 16 | 17 | 18 | 19 | 20 | 21 | 22 | 23 | 24 | 25 | 26 | 27 | 28 | 29 | 30 |
|----|----|----|----|----|----|----|----|----|----|----|----|----|----|----|

**(b)** Determination Data And Model Output (Day 31)

31 → ③1

**(c)** Determination Data And Model Output (Day 32)

32 → ③1 ③2

**(d)** Determination Data And Model Output (Day 45)

45 → 31 32 33 34 35 36 37 38 39 40 41 42 43 44 ④5

Calculate And Output Product Value

**(e)** Determination Data And Model Output (Day 46)

46 → 32 33 34 35 36 37 38 39 40 41 42 43 44 45 ④6

Calculate And Output Product Value

# FIG. 14

Fifth Embodiment

90 — Controller ———— Arm Drive Device

21

**Robot Failure Symptom Detection Apparatus**

5

51 — Current Value Time-Sequence Data Acquisition Unit

**Determination Unit**

55

52 — Evaluation Value Calculation Unit

Learning Unit

57

53 — Representative Evaluation Value Generation Unit

Determination Model Storage Unit

59

71 — Normalization Unit

Probability Output Unit

58

50 — Storage Unit

Transformation Unit

61

54 — Sequence Processing Unit

62 — Alarm Issuance Unit

Display Unit

63

## FIG. 15

Sixth Embodiment

90 — Controller ———— Arm Drive Device

21

**Robot Failure Symptom Detection Apparatus** 5

51 — Current Value Time-Sequence Data Acquisition Unit

52 — Evaluation Value Calculation Unit      52 — Evaluation Value Calculation Unit

53 — Representative Evaluation Value Generation Unit      53 — Representative Evaluation Value Generation Unit

71 — Normalization Unit      71 — Normalization Unit

50 — Storage Unit

Determination Unit 55

Learning Unit 57

54 — Sequence Processing Unit

Determination Model Storage Unit 59

Probability Output Unit 58

Transformation Unit 61

FIG. 16

FIG. 17

FIG. 18

FIG. 19

82A

84A

○I2 Monitor   ○DUTY   ○PTP   ◉Partial Integrated Value | Frequency Band ∨

| 20 - 30 △
| 30 - 40
| 40 - 50
| ALL ▽

Predicted Date
2021/12/8

Comprehensive
Predicted Date
2021/12/1

Reference Line

Prediction Line

Evaluation Value

Time

◉JT1
○JT2
○JT3
○JT4
○JT5
○JT6
○JT7
○JT8

81

83

80

Robot Maintenance Support Apparatus — 5a

## INTERNATIONAL SEARCH REPORT

| | International application No. |
|---|---|
| | **PCT/JP2022/013021** |

**A.    CLASSIFICATION OF SUBJECT MATTER**

***B25J 19/06***(2006.01)i; ***G05B 23/02***(2006.01)i; ***G01M 99/00***(2011.01)i
FI:    G01M99/00 Z; B25J19/06; G05B23/02 R

According to International Patent Classification (IPC) or to both national classification and IPC

**B.    FIELDS SEARCHED**

Minimum documentation searched (classification system followed by classification symbols)

B25J19/06; G05B23/02; G01M99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2020-102001 A (FANUC LTD) 02 July 2020 (2020-07-02) | 1-19 |
| A | JP 2021-022290 A (FUTABA DENKI KOGYO KK) 18 February 2021 (2021-02-18) | 1-19 |
| A | JP 2011-059790 A (HITACHI LTD) 24 March 2011 (2011-03-24) | 1-19 |
| A | WO 2020/031225 A1 (NISSAN MOTOR CO., LTD.) 13 February 2020 (2020-02-13) | 1-19 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

### INTERNATIONAL SEARCH REPORT
Information on patent family members

| International application No. |
| --- |
| **PCT/JP2022/013021** |

| Patent document cited in search report | | | Publication date (day/month/year) | Patent family member(s) | | | Publication date (day/month/year) |
| --- | --- | --- | --- | --- | --- | --- | --- |
| JP | 2020-102001 | A | 02 July 2020 | US | 2020/0198128 | A1 | |
| | | | | DE | 102019219332 | A1 | |
| | | | | CN | 111352388 | A | |
| JP | 2021-022290 | A | 18 February 2021 | (Family: none) | | | |
| JP | 2011-059790 | A | 24 March 2011 | US | 2012/0166142 | A1 | |
| | | | | EP | 2477086 | A1 | |
| WO | 2020/031225 | A1 | 13 February 2020 | CN | 112534236 | A | |

Form PCT/ISA/210 (patent family annex) (January 2015)